# EUROPEAN PATENT APPLICATION

(11) **EP 2 854 095 A1**
(43) Date of publication of application: **01.04.2015**
(21) Application number: 14796653.5
(22) Date of filing: 25.08.2014
(51) Int. Cl.: G06Q 40/04

(54) **MANAGEMENT DEVICE FOR FINANCIAL INSTRUMENT TRANSACTIONS, MANAGEMENT SYSTEM FOR FINANCIAL INSTRUMENT TRANSACTIONS, MANAGEMENT METHOD FOR FINANCIAL INSTRUMENT TRANSACTIONS, AND PROGRAM RECORDING MEDIUM**

(30) Priority: 03.04.2014 JP 2014077354; 01.05.2014 JP 2014094833
(71) Applicant: Money Square Holdings, Inc., Minato-ku, Tokyo 107-6240 (JP)
(72) Inventor: AIBA, Hitoshi, Tokyo 107-6240 (JP); YAMAMOTO, Hisatoshi, Tokyo 107-6240 (JP)
(74) Representative: Klunker . Schmitt-Nilson . Hirsch
(86) International application number: PCT/JP2014/072092
(87) International publication number: WO 2014/185554

(57) **Abstract**

[Problem to be Solved]

To provide a financial product trade managing apparatus to contain occurrence of a loss with fluctuation in a market price and to facilitate gaining a large profit.

[Solution]

A financial product trade managing apparatus includes an order information generating section to generate order information to place a first order and a second order. The first order is set so as to be contracted after the market price passes through a first order price and thereafter reverses the direction of the fluctuation and matches again with the first order price. The second order is set so as to be contracted after the market price passes through a second order price and thereafter reverses the direction of the fluctuation and matches again with the second order price. The second order price is set so as to rise or fall trailing the fluctuation in the market price.

## Description

### Technical Field

The present invention relates to a technique for managing and supporting transactions. The present invention can be applied to, for example, devices for managing and supporting transactions of financial products such as foreign exchange.

### Background Art

The market order (an order form in which a transaction is performed at a market price at which an order is placed) and the limit order (an order form in which a transaction is performed when a market price becomes equal to a predetermined price) are known as order forms in transactions of financial products for foreign exchange, or the like.

An invention for performing transactions with these order forms using a computer system has been known (e.g., refer to Patent Literature 1). In the art of Patent Literature 1, a transaction is performed by placing an order for a financial product at a predetermined price and contracting the order when the market price of the financial product reaches this price.

### Citation List

### Patent Literature

Patent Literature 1: Japanese Patent Laid-Open No. 2006-099787

### Summary of Invention

### Technical Problem

Here, the price of a financial product irregularly fluctuates all the time, and thus it is practically impossible to predict the price exactly. For example, when a limit order is placed, there is a case where the price of a financial product falls (or rises) near to a predetermined price, but turns to rise (or fall) without reaching the predetermined price. However, the art of above-described Patent Literature 1 can only place a limit order at a predetermined price and contract the limit order when a market price becomes equal to this price. For this reason, there is a disadvantage of being hard to contain, when an unexpected fluctuation in the market price occurs, the occurrence of a loss with this fluctuation, or the occurrence of a situation in which a required margin runs short and a transaction is forced to stop.

Meanwhile, although there is a possibility of gaining a large profit by a large fluctuation in the market price, there is also a drawback of the art of the above-described Patent Literature 1 that a profit that may be gained if a transaction is manually performed is not gained because an order placing price is fixed.

The present invention is made in view of these drawbacks, and has an object to provide a financial product trade managing apparatus, a transaction managing method, and a program storage medium that can contain a loss with the fluctuation in a market price and can provide an opportunity to gain a large profit.

### Solution to Problem

A financial product trade managing apparatus according to the present invention is a financial product trade managing apparatus to perform a transaction of a financial product, and includes an order information generating section to generate order information to place a first order to acquire either one of a long position and a short position, and order information to place a second order to acquire the other one of the long position and the short position, wherein the order information on the first order is set such that the first order is contracted when the market price fluctuates in either one of a falling direction and a rising direction to pass through a first order price and thereafter reverses the direction of the fluctuation to pass again through the first order price, the order information on the second order is set such that the second order is contracted when the market price fluctuates in the other one of the falling direction and the rising direction to pass through a second order price and thereafter reverses the direction of the fluctuation to pass again through the second order price, and the order information on the second order contains trailing width information representing the value of a trailing width and is set such that, every time the market price fluctuates in the other one of the falling direction and the rising direction to pass through the second order price and thereafter fluctuates in the direction by the trailing width, the second order price is changed in the direction by the trailing width.

In the financial product trade managing apparatus of the present invention, the order information on the first order is preferably set such that the first order price is fixed even when the market price fluctuates in either one of the falling direction and the rising direction to pass through the first order price and fluctuates in the direction by the trailing width or more.

In the financial product trade managing apparatus of the present invention, the order information on the first order is preferably set such that the first order is placed when the market price fluctuates in either one of the falling direction and the rising direction to pass through the first order price, and further fluctuates in the direction to reach a first order placing trigger price, and is contracted when the market price thereafter reverses the direction of the fluctuation to reach the first order price.

In the financial product trade managing apparatus of the present invention, the order information on the second order is preferably set such that the second order is placed when the market price fluctuates in the other one of the falling direction and the rising direction to pass through the second order price and thereafter further fluctuates in the direction to reach a second order placing trigger price, and is contracted when the market price thereafter reverses the direction of the fluctuation to reach the second order price.

In the financial product trade managing apparatus of the present invention, the order information on the first order and/or the order information on the second order is preferably set as any one of a limit order, a stop order, and a market order.

In the financial product trade managing apparatus of the present invention, the order information on the second order is preferably set such that the second order is not contracted when the market price reverses the direction of the fluctuation to reach again the second order price, but the second order is contracted after the market price further fluctuates to pass through the second order price.

In the financial product trade managing apparatus of the present invention, the order information on the second order is preferably set such that the second order is contracted when the market price reverses the direction of the fluctuation to match again with the second order price, using this matching as a trigger.

In the financial product trade managing apparatus of the present invention, the order information generating section preferably performs, after the first order and the second order are contracted, on the basis of the second order price of the second order, processing of generating the order information to place another one of the first order at the first order price and the order information to place another one of the second order at the second order price, and processing of canceling the order information on the contracted first order and the order information on the contracted second order.

In the financial product trade managing apparatus of the present invention, the order information generating section preferably generates, with respect to the same financial product, the order information on the plurality of first orders having the first order prices different from one another and/or the order information on the plurality of second orders having the second order prices different from one another.

In the financial product trade managing apparatus of the present invention, the order information generating section is preferably set so as to repeat, after the order information on the first order and the order information on the second order are each contracted, processing from the acquisition of a position by another one of the first order to the settlement of the position based on the second order.

In the financial product trade managing apparatus of the present invention, the order information generating section preferably sets the first and second order information such that a transaction in which the first order is a buy order and the second order is a sell order, and a transaction in which the first order is a sell order and the second order is a buy order are repeated in parallel.

In the financial product trade managing apparatus of the present invention, the order information generating section preferably sets the first and second order information such that, between an input upper limit price and lower limit price, the plurality of first orders having different prices, and the plurality of second orders having different prices are placed.

In the financial product trade managing apparatus of the present invention, it is preferable that the order information generating section generates, in addition to first order information as the order information to place the first order and second order information as the order information to place the second order, third order information as the order information to place a third order to hold a position when the market price of the financial product becomes equal to a predetermined third price, and fourth order information as the order information to place a fourth order to settle fourth order information as the order information to place a fourth order to settle when the market price becomes equal to a predetermined fourth price, and causes a recording unit to record the generated order information, and the pieces of order information on the first to fourth orders are set such that the first order is set as a sell order, the second order is set as a buy order to settle the first order, the third order is set as a buy order, the fourth order is set as a sell order to settle the third order, the third and fourth orders are cancelled when an order relating to the first order is contracted, and the first and second orders are cancelled when the third order is contracted.

The financial product trade managing apparatus of the present invention preferably includes a contract information generating section for contracting the generated order information when the market price reaches a predetermined price.

A financial product trade managing system according to the present invention is a financial product trade managing system for performing a transaction of a financial product using a financial product managing apparatus and a communication terminal that are in communication connection with each other, and includes an order information generating section for generating order information to place a first order to acquire either one of a long position and a short position and order information to place a second order to acquire the other one of the long position and the short position, wherein the order information on the first order is set so as to be contracted after the market price fluctuates in either one of a falling direction and a rising direction to pass through a first order price, and thereafter reverses the direction of the fluctuation to reach again the first order price, the order information on the second order is set so as to be contracted after the market price fluctuates in the other one of the falling direction and the rising direction to pass through the second order price, and thereafter reverses the direction of the fluctuation to reach again the second order price, and the order information on the second order contains trailing width information representing the value of a trailing width, every time the market price fluctuates in the other one of the falling direction and the rising direction to pass through the second order price and thereafter fluctuates in the direction by trailing width, the second order price is changed in the direction by the trailing width.

A financial product trade managing method of the present invention is a financial product trade managing method to perform transaction of a financial product, and includes order information generating processing of generating, using a computer, order information to place a first order to acquire either one of a long position and a short position, and order information to place second order to acquire the other one of the long position and the short position, wherein, in order information generating processing, the order information on the first order is set so as to be contracted after the market price fluctuates in one of a falling direction and a rising direction to pass through a first order price and thereafter reverses the direction of the fluctuation to reach again the first order price, the order information on the second order is set so as to be contracted after the market price fluctuates in the other one of the falling direction and the rising direction to pass through the second order price and thereafter reverses the direction of the fluctuation to reach again the second order price, as well as the order information on the second order contains trailing width information representing the value of a trailing width, and is set such that, every time the market price fluctuates in the other one of the falling direction and the rising direction to pass through the second order price and thereafter fluctuates in the direction by the trailing width, the second order price is changed in the direction by the trailing width.

A program storage medium of the present invention is a computer readable storage medium in which a computer program to perform a transaction of a financial product is stored, the computer program causing a computer to execute order information generating processing of generating, using the computer, order information to place a first order to acquire either one of a long position and a short position, and order information to place a second order to acquire the other one of the long position and the short position, wherein, in the order information generating processing, the order information on the first order is set so as to be contracted after the market price fluctuates in either one of a falling direction and a rising direction to pass through a first order price and thereafter reverses the direction of the fluctuation to reach again the first order price, the order information on the second order is set so as to be contracted after the market price fluctuates in the other one of the falling direction and the rising direction to pass through the second order price and thereafter reverses the direction of the fluctuation to reach again the second order price, as well as the order information on the second order contains trailing width information representing the value of a trailing width and is set such that, every time the market price fluctuates in the other one of the falling direction and the rising direction to pass through the second order price and thereafter fluctuates in the direction by the trailing width, the second order price is changed in the direction by the trailing width.

### Advantageous Effects of Invention

In the financial product trade managing apparatus, the financial product trade managing system, the financial product trade managing method, and the program storage medium according to the present invention, a first order is contracted when a market price fluctuates in either one of a falling direction and a rising direction to pass through a first order price and thereafter reverses the direction of the fluctuation to pass again through the first order price. In addition, a second order is contracted when the market price fluctuates in the other one of the falling direction and the rising direction to pass through a second order price, and thereafter reverses the direction of the fluctuation to reach again the second order price. Such a configuration increases a possibility of performing a transaction at a price that is close to a price at which a bear market turns into a bull market, or close to a price at which a bull market turns into a bear market, which therefore increases a possibility of gaining a large profit by the transaction.

In addition, a second order price changes trailing the market price on the basis of trailing width information, which thus increases the possibility of increasing a profit largely when the market sharply fluctuates.

Furthermore, by providing the trailing width information only in the second order, it is possible to contain the occurrence of an unrealized loss due to the acquisition of a position of a first order.

For such reasons, according to the financial product trade managing apparatus, the financial product trade managing system, the financial product trade managing method, and the program storage medium of the present invention, the occurrence of a loss with the fluctuations in the market price can be contained, and gaining a large profit is facilitated.

In the present invention, by fixing the first order price without making a change on the basis of the trailing width information, it is possible to simplify inputting an order and transaction processing, and to contain the occurrence of an unrealized loss.

In the present invention, with the configuration in which the first order is placed when the market price becomes equal to a first order placing trigger price, it is possible to enhance the reliability of determination that the market price turns from a bull market into a bear market or turns from a bear market into a bull market, which thereby facilitates gaining a large profit.

Similarly, with the configuration in which the second order is placed when the market price becomes equal to a second order placing trigger price, it is possible to enhance the reliability of determination that the market price turns from a bear market into a bull market or turns from a bull market into a bear market, which thereby facilitates gaining a large profit.

In the present invention, by placing order information as any one of a limit order, a stop order, and a market order, the present invention can be applied to various order forms.

In the present invention, the second order is not contracted when the market price reverses the direction of the fluctuation to reach again the second order price, but the second order is contracted when the market price further fluctuates to pass through the second order price, and it is thereby possible to continue the transaction without contracting the second order when the direction of the fluctuation is reversed the instance at which the market price matches with the second order price for the second time. As a result, it is possible to make the second order hard to be contracted, and to facilitate gaining a large profit in the case where the market price frequently switches between falling and rising.

In the present invention, by contracting the second order when the market price reverses the direction of the fluctuation to match again with the second order price, using this matching as a trigger, it is possible to facilitate contracting the second order, and to facilitate gaining a profit in a short time.

In the financial product trade managing apparatus of the present invention, after a first order and a second order are contracted, by generating new order information on a first order and a second order on the basis of the price of the contracted second order, and by canceling the contracted first order and second order, it is possible to continuously repeat an order reflecting the market price. This facilitates gaining a large profit.

In the financial product trade managing apparatus of the present invention, by placing a plurality of first orders and a plurality of second orders at different prices, respectively, it is possible to dissipate orders into a plurality of prices, which thereby facilitates gaining a sufficient profit even if the market price unexpectedly fluctuates.

In the financial product trade managing apparatus of the present invention, by repeating processing of placing, after a first order and a second order are contracted, a first order and a second order, it is possible to perform a continuous transaction on the basis of simple order processing, which therefore facilitates gaining a large profit.

In the financial product trade managing apparatus of the present invention, by performing a transaction in which a first order is a buy order and a second order is a sell order, and a transaction in which a first order is a sell order and a second order is a buy order, in parallel, the buy order as the first order of the one transaction and the buy order as the second order of the other transaction are simultaneously performed, and the sell order as the second order of the one transaction and the sell order as the second order of the other transaction are simultaneously performed. Thus, as compared with the case where only one of these transactions is performed, gaining a large amount of profit is facilitated.

In the financial product trade managing apparatus of the present invention, by setting a plurality of first orders having different prices and a plurality of second orders having different prices between input upper limit price information and lower limit price information, a customer may only input a upper limit price and a lower limit price of a price range within which a transaction is performed, and therefore the operation of the financial product trade managing apparatus is simplified.

In the financial product trade managing apparatus of the present invention, by canceling, when one of the first order and the third order is contracted, the second being the other order and the fourth order being an order to settle the other order, it is possible to contain the occurrence or expansion of a substantial loss due to the continuation of an order in a direction opposite to the fluctuation in the market price while performing a transaction regardless of whether the market price fluctuates in a rising direction and a falling direction, and therefore the occurrence of a loss can be contained while the transaction is firmly performed.

In the financial product trade managing apparatus of the present invention, by providing a contract information generating section, it is possible to contract an order on the basis of the order information and to reliably perform a transaction of a financial product.

### Brief Description of Drawings

[Figure 1] Figure 1 is a block diagram schematically showing the configuration a financial product trade managing system and a financial product trade managing apparatus according to a first embodiment of the present invention.
[Figure 2] Figure 2 is a table of a field definition of an order table stored in the financial product trade managing apparatus shown in Figure 1.
[Figure 3] Figure 3 is a flow chart showing a processing procedure when an order is placed in the financial product trade managing apparatus shown in Figure 1.
[Figure 4] Figure 4 is a graph for illustrating the principle of processing procedure of a "dismissing-first-contract-chance order" in the financial product trade managing apparatus shown in Figure 1.
[Figure 5] Figure 5 is a graph for illustrating the principle of processing procedure of the "dismissing-first-contract-chance order" in the financial product trade managing apparatus shown in Figure 1.
[Figure 6] Figure 6 is a graph for illustrating the principle of processing procedure of the "dismissing-first-contract-chance order" in the financial product trade managing apparatus shown in Figure 1.
[Figure 7] Figure 7 is a graph for illustrating the principle of processing procedure of the "dismissing-first-contract-chance order" in the financial product trade managing apparatus shown in Figure 1.
[Figure 8] Figure 8 is a graph for illustrating the principle of processing procedure of a "settlement trailing stop order" in the financial product trade managing apparatus shown in Figure 1.
[Figure 9] Figure 9 is a graph for illustrating the principle of processing procedure of the "settlement trailing stop order" in the financial product trade managing apparatus shown in Figure 1.
[Figure 10] Figure 10 is a graph for illustrating the principle of processing procedure of the "settlement trailing stop order" in the financial product trade managing apparatus shown in Figure 1.
[Figure 11] Figure 11 is a graph for illustrating the principle of processing procedure of the "settlement trailing stop order" in the financial product trade managing apparatus shown in Figure 1.
[Figure 12] Figure 12 is a graph for illustrating the principle of processing procedure of the "settlement trailing stop order" in the financial product trade managing apparatus shown in Figure 1.
[Figure 13] Figure 13 is a schematic diagram showing an example of an input screen displayed on a displaying part of a client terminal.
[Figure 14] Figure 14 is a table showing an order information group that is generated by the financial product managing apparatus according to this first embodiment.
[Figure 15] Figure 15 is a graph for illustrating a specific processing procedure in the financial product trade managing apparatus shown in Figure 1.
[Figure 16] Figure 16 is a graph for illustrating the specific processing procedure in the financial product trade managing apparatus shown in Figure 1.
[Figure 17] Figure 17 is a graph for illustrating the specific processing procedure in the financial product trade managing apparatus shown in Figure 1.
[Figure 18] Figure 18 is a graph for illustrating the specific processing procedure in the financial product trade managing apparatus shown in Figure 1.
[Figure 19] Figure 19 is a graph for illustrating the specific processing procedure in the financial product trade managing apparatus shown in Figure 1.
[Figure 20] Figure 20 is a graph for illustrating the specific processing procedure in the financial product trade managing apparatus shown in Figure 1.
[Figure 21] Figure 21 is a graph for illustrating the specific processing procedure in the financial product trade managing apparatus shown in Figure 1.
[Figure 22] Figure 22 is a graph for illustrating the specific processing procedure in the financial product trade managing apparatus shown in Figure 1.
[Figure 23] Figure 23 is a schematic diagram showing an example of an input screen displayed on a displaying part of a client terminal, in a financial product trade managing system and a financial product trade managing apparatus according to a second embodiment of the present invention.
[Figure 24] Figure 24 is a table showing an order information group that is generated by the financial product trade managing apparatus shown in Figure 1.
[Figure 25] Figure 25 is a graph for illustrating a specific processing procedure in the financial product trade managing apparatus shown in Figure 1.
[Figure 26] Figure 26 is a graph for illustrating the specific processing procedure in the financial product trade managing apparatus shown in Figure 1.
[Figure 27] Figure 27 is a graph for illustrating the specific processing procedure in the financial product trade managing apparatus shown in Figure 1.
[Figure 28] Figure 28 is a graph for illustrating the specific processing procedure in the financial product trade managing apparatus shown in Figure 1.
[Figure 29] Figure 29 is a graph for illustrating the specific processing procedure in the financial product trade managing apparatus shown in Figure 1.
[Figure 30] Figure 30 is a graph for illustrating the specific processing procedure in the financial product trade managing apparatus shown in Figure 1.
[Figure 31] Figure 31 is a graph for illustrating the specific processing procedure in the financial product trade managing apparatus shown in Figure 1.
[Figure 32] Figure 32 is a graph for illustrating the specific processing procedure in the financial product trade managing apparatus shown in Figure 1.
[Figure 33] Figure 33 is a graph for illustrating the specific processing procedure in the financial product trade managing apparatus shown in Figure 1.
[Figure 34] Figure 34 is a schematic diagram showing an example of an input screen displayed on a displaying part of a client terminal, in a financial product trade managing system and a financial product trade managing apparatus according to an third embodiment of the present invention.
[Figure 35] Figure 35 is a graph for illustrating a specific processing procedure in the case where a "shifting function" is performed in the financial product trade managing apparatus shown in Figure 1.
[Figure 36] Figure 36 is a graph for illustrating a transaction example in the case where a transaction is performed in the financial product trade managing apparatus according to the above respective embodiments.

### Description of Embodiments

### [First Embodiment of the Present Invention]

An embodiment of the present invention will be described below with reference to the drawings.

### [System Configuration]

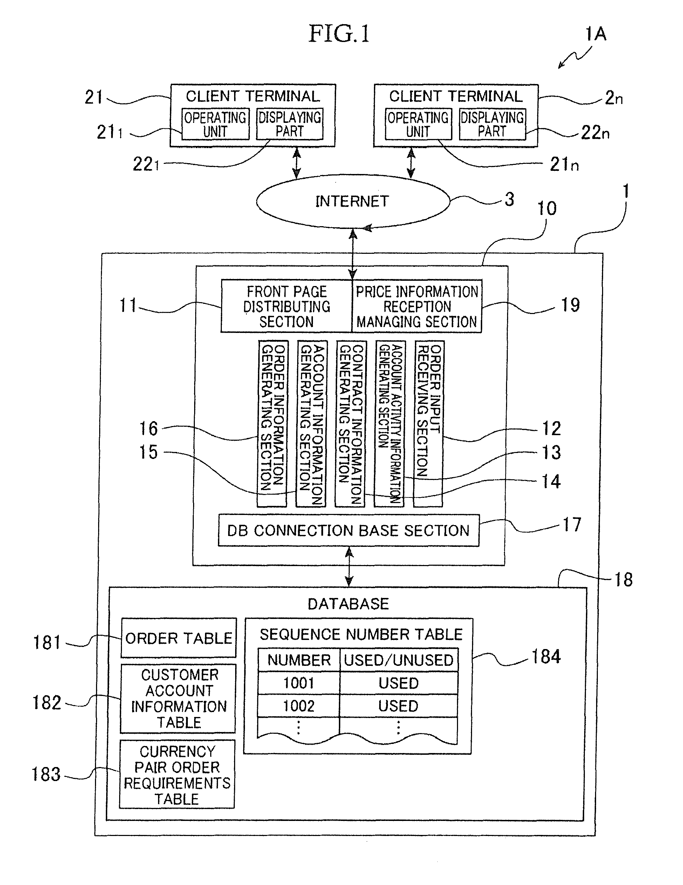

Figure 1 is a function block diagram showing the system configuration of a financial product trade managing system of this first embodiment. As shown in the drawing, a financial product trade managing system 1A includes a financial product trade managing apparatus 1, and a number n (n≥1) of client terminals 2₁ to 2ₙ. The financial product trade managing apparatus 1 and the client terminals 2₁ to 2ₙ can communicate with each other via an internet 3 as a WAN (Wide Area Network). The financial product trade managing system 1A of this first embodiment deals in foreign exchange as a financial product.

The financial product trade managing apparatus 1 is a server computer administrated and operated by a trader of the financial product, and has a Web server function and a database function accommodating large-volume data. The client terminals 2₁, ..., 2ₙ are communication terminals that are possessed and used by individuals or companies that trade the financial product and each having a data communicating function, and personal computers, tablets, smartphones, cellular phone terminals, or the like correspond thereto. The client terminals 2₁, ..., 2ₙ include operating units 21₁, ..., 21ₙ used to input various instructions with a mouse or a keyboard, LCDs (Liquid Crystal Displays) or other kind of displaying parts 22₁, ..., 22ₙ for displaying instructions input by the operating units 21₁, ..., 21ₙ, or images, respectively. Note that the operating units 21₁, ..., 21ₙ and the displaying parts 22₁, ..., 22ₙ may be each formed by a touch panel that an operator operates by contacting or moving a finger, a stylus, or the like on the screen thereof. Note that since the client terminals 2₁, ..., 2ₙ, the operating units 21₁, ..., 21ₙ, and the displaying part 22₁, .... 22ₙ have the same configuration, respectively, they will be hereafter referred to as client terminals 2, operating units 21, and displaying parts 22, excluding the case where they need to be distinguished.

Although not shown in Figure 1, the financial product trade managing apparatus 1 and the client terminals 2₁, ..., 2ₙ each include at least one CPU (Central Processing Unit), a RAM (Random Access Memory) for functioning as a work area of the CPU, a ROM (Read Only Memory) in which a bootstrap program for starting up and the like are recorded, an auxiliary storage device such as a hard disk in which various program, pieces of data, and the like are recorded, a communication interface used for data transmission/reception, and the like. In the auxiliary storage device, an OS (Operating System) program, various application programs, pieces of data recorded in a database, and the like are recorded, and these programs and pieces of data implement various functions in collaboration with hardware resources, through arithmetic processing by the CPU.

Note that the financial product trade managing apparatus 1 may be formed by one server computer, or may be formed by a plurality of network computer systems.

As shown in Figure 1, the financial product trade managing apparatus 1 includes a data processing section 10 that is implemented by the above-described various programs and the hardware resources, and a database 18 in which various pieces of data processed by the data processing section 10 are recorded. The data processing section 10 is for performing processing of generating and manipulating various pieces of data used in the financial product trade managing apparatus 1, and includes a front page distributing section 11, an order input receiving section 12, an account activity information generating section 13, a contract information generating section 14, an account information generating section 15, an order information generating section 16, a database (DB) connection base section 17, and a price information reception managing section 19.

The order input receiving section 12 receives data on various orders input from the client terminal 2, and performs various processing needed to conclude orders for financial products.

The account activity information generating section 13 receives a request for deposit and withdrawal from the client terminal 2, and generates a list of deposit and withdrawal on the basis of the request.

The order information generating section 16 generates information about a concluded order for a financial product on the basis of the information processed by the order input receiving section 12. Orders include so-called market orders, limit orders, stop orders, as well as if-done orders.

Here, a market order is an order form with which a transaction is performed at a market price at the time of placing the order, without specifying an order price (buying price or selling price).

A limit order is an order form in which an order is placed with a specified order price, and the order is contracted (i.e., a "buy" or "sell" is concluded) if a market price becomes equal to the order price. A normal limit order (in other words, a limit order in a forward direction) aims to gain a profit by specifying a buying price and a selling price such that a financial product bought at a low price is sold at a high price, or a financial product sold at a high price is bought back at a low price.

A stop order is a limit order in a direction opposite to that of a normal one, that is, a buy order with a specified price higher than an exchange rate at the time of placing the order, or a sell order with a specified price lower than an exchange rate at the time of placing the order. Typically, a stop order is used to automatically perform "buying" or "selling" if an exchange rate sharply fluctuated, in order to minimize a loss. In contrast, in this first embodiment, as will be described hereafter, by placing a "dismissing-first-contract-chance order" or a "settlement trailing stop order" using a stop order to assure a large profit.

An if-done order is a method in which, when the first order (one of a buy order or a sell order) is contracted, the other one of the buy order and the sell order is automatically placed. When this method is executed by a computer, in the first order, one of "buying" and "selling" is placed by setting one of order information on "buying" and order information on "selling" into an active state and setting the other one into a stand-by state. Then, when the order of active order information is contracted, the other one of "buying" and "selling" is placed by switching the other order information from the stand-by state to the active state.

The contract information generating section 14 performs contracting processing of an order generated by the order information generating section 16, and performs processing of transmitting information on the completed contracting processing to the client terminal 2 of a customer. Note that the term "contract" here refers to various procedures and processing to conclude a trade of a financial product on the basis of an order of a customer. As will be described hereafter, when a contract is concluded in this first embodiment, a trade in foreign exchange is made, and consequently, on the basis of an instruction of the contract information generating section 14, the account information generating section 15 converts margin information (that is, information to guarantee that the contract of the order can be fulfilled) in accordance with a trading price, and further the account activity information generating section 13 records a status of deposit and withdrawal into the list of deposit and withdrawal. In addition, when a contract is concluded, the contract information generating section 14 causes the displaying part 22 of the client terminal 2 to display character information indicating that the contract is concluded, and performs account activity processing on a bank account of the client terminal on the basis of the trading price.

The account information generating section 15 has a function of generating account balance information on a customer, and managing the account balance information as margin information. Note that the account balance information generated in the account information generating section 15 is periodically compared with information on an actual account balance of the customer provided by a financial institution such as a bank, so as to be consistent with the actual account balance.

The database connection base section 17 performs conversions between data generated and manipulated in the data processing section 10 and data recorded in the database 18 (e.g., interconversion between a logical data structure and a physical data structure), and performs processing required to communicate data between the data processing section 10 and the database 18.

The database 18 records data used in the financial product trade managing apparatus 1. The database 18 in this first embodiment is formed by a relational database, but any form of database suitable to record or rewrite a large amount of data, such as an object database, may be used. In the database 18, an order table 181, a customer account information table 182, a currency pair order requirements table 183, and a sequence number table 184 are recorded. In the sequence number table 184, sequence numbers for identifying order information (to be described hereafter) are recorded. The order table 181, the customer account information table 182, and the currency pair order requirements table 183 will be described hereafter in detail.

The front page distributing section 11 generates image data to be displayed on the displaying part 22 of the client terminal 2, and transmits the generated image data to the client terminal 2.

The price information reception managing section 19 obtains information on a price of a financial product handled by the financial product trade managing apparatus 1, performs processing which are needed to make the obtained data available in the data processing section 10 or the client terminal 2, and manages the processed data. In this first embodiment, the price information reception managing section 19 periodically obtains, records, and manages information on a foreign exchange market price.

Note that, although not shown, the financial product trade managing apparatus 1 includes a timer for obtaining and managing information on a date and time, and a time limit managing section for managing order time limits of pieces of order information on the basis of the information on the date and time obtained by this timer.

The data processing section 10, the database 18, the front page distributing section 11, the order input receiving section 12, the account activity information generating section 13, the contract information generating section 14, the account information generating section 15, the order information generating section 16, the database connection base section 17, and the price information reception managing section 19 provided in financial product trade managing apparatus 1 may each have any configuration. For example, if the financial product trade managing apparatus 1 is a network computer system formed by a plurality of server computers, components thereof may be arranged in the plurality of server computers in a distributed manner. In addition, the server computers may be arranged across computer systems held by a plurality of traders or server administrators, respectively, (e.g., computer systems held or managed by financial-securities exchange, other financial product traders, providers, hosting system providers, and the like). The server computer may be configured as a so-called cloud computer system. Furthermore, configurations of at least some of the data processing section 10, the database 18, the front page distributing section 11, the order input receiving section 12, the account activity information generating section 13, the contract information generating section 14, the account information generating section 15, the order information generating section 16, the database connection base section 17, and the price information reception managing section 19 may be provided in the client terminal 2 of the financial product trade managing system 1A, rather than the financial product trade managing apparatus 1.

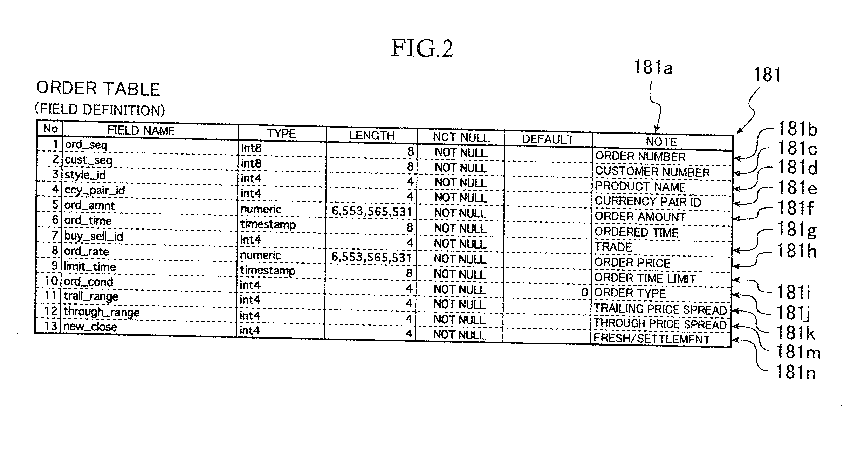

Figure 2 is a table of the field definition of the order table 181. As shown in the drawing, the order table 181 includes fields for the number of items, and defines a field name, a data type such as character string, number, and date and time ("type" in Figure 2), a data length such as a bit length ("length" in Figure 2), a blank-not-allowed specification ("Not Null" in Figure 2), the presence/absence of a default value ("default value" in Figure 2), an item name of data ("note" in Figure 2), and the like.

In the above-described financial product trade managing apparatus 1, with respect to the same kind of financial product, a transaction with an if-done order using a plurality of stop orders can be fulfilled by one advance order.

### [Processing Procedure]

Next, a processing procedure performed when the financial product trade managing system 1A of this first embodiment generates order information.

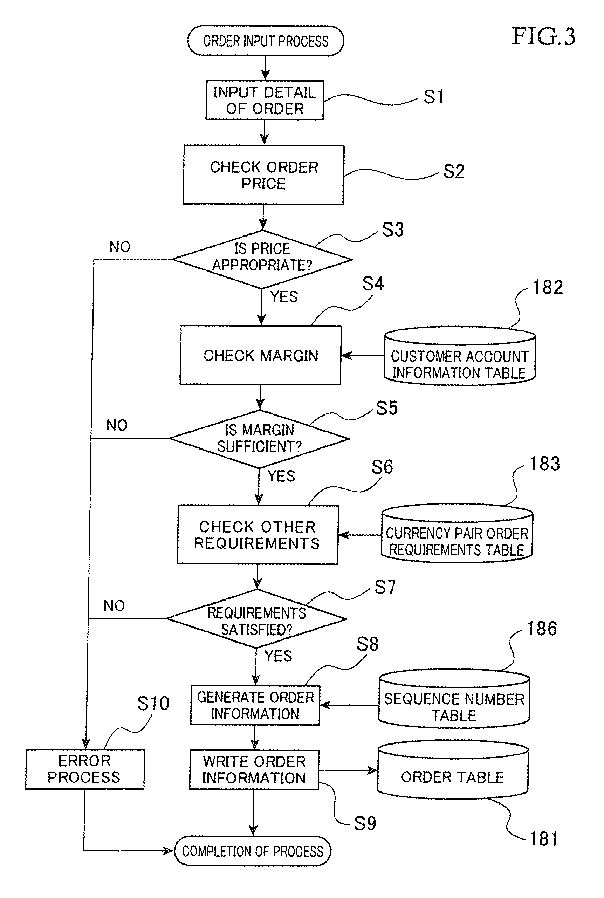

Figure 3 is a flow chart showing a processing procedure, in a financial product trade managing apparatus 1 of this first embodiment, at the time of receiving a buy stop order (fresh buy stop order) as the "first order," and a sell stop order (fresh sell stop order: in this first embodiment, the second order is a trailing stop order.) as the "second order". The processing procedure at the time of the reception will be described below on the basis of the drawing.

A customer who uses the financial product trade managing system 1A accesses the financial product trade managing apparatus 1 using the client terminal 2. The front page distributing section 11 of the financial product trade managing apparatus 1 causes the displaying part 22 of the accessing client terminal 2 to display an input screen to input requirements of the trade. The customer inputs the details of an order into this input screen (step S1). Note that the configuration of the input screen will be described hereafter.

When data input or selected on the input screen is provided to the financial product trade managing apparatus 1, the order input receiving section 12 of the financial product trade managing apparatus 1 checks the input details of the order. Furthermore, the order input receiving section 12 inspects individual order prices (step S2). Specifically, the order input receiving section 12 compares the current market price of a selected currency pair with a price to be the criterion of the order that is input on the input screen, and checks a high-and-low relationship between the current market price and the price to be the criterion, or checks whether or not the current market price is lying between a upper limit price and a lower limit price that are input on the input screen. When the result of the check indicates that the input prices are appropriate (e.g., in the case where a setting to the order input receiving section 12 is that the appropriateness is only the case where a transaction based on the input prices may gain a profit, when the setting is satisfied), the order input receiving section 12 determines that the input prices are appropriate.

When the price of a buy stop order is determined to be appropriate ("YES" in step S3,) the account information generating section 15 obtains margin information on the customer from the customer account information table 182.

The order input receiving section 12 compares the obtained margin information with the total amount of order of the customer, and checks whether or not the amount of margin is equal to or more than an allowable order amount.

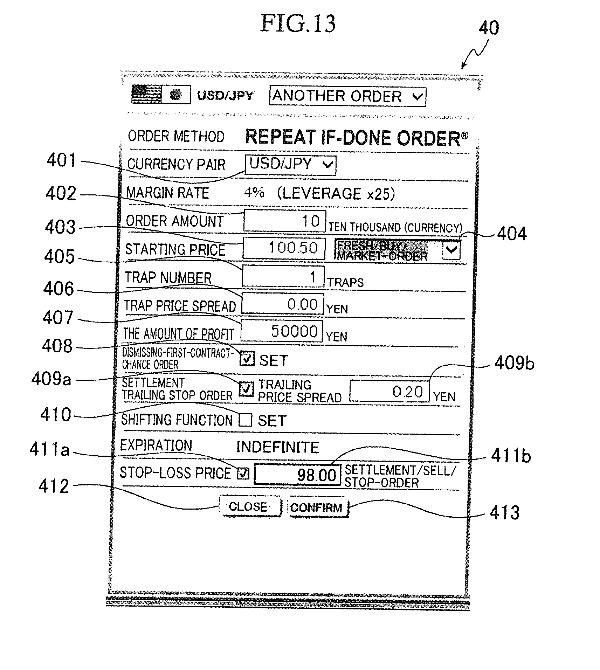

The term "allowable order amount" here refers to the amount necessary to place an order (hereafter, the same applies to the present specification). That is, an allowable order amount may be, for example, the amount of required margin that is calculated on the basis of an amount input into an order amount input field 402 on an input screen 40 shown in Figure 13, may be a value obtained by multiplying the value of the input amount by a predetermined ratio, or may be a predetermined amount that is given beforehand.

The order information generating section 16 generates "order information group," to be described hereafter, only when the amount of the margin is equal to or more than the allowable order amount ("YES" in step S5). It is thereby possible to receive an order only when it is ensured that a customer can make a payment.

When the amount of the margin is equal to or more than the allowable order amount ("YES" in step S5), the order input receiving section 12 checks whether or not the details of the order satisfy requirements for the order other than the above-described, on the basis of data recorded in the currency pair order requirements table 183, or the like (step S6).

When the various requirements of the order are satisfied ("YES" in step S7), the order details are determined to satisfy all the requirements needed for the order. In this case, the front page distributing section 11 causes the displaying part 22 of the client terminal 2 to display a confirmation screen (not shown). On the confirmation screen (not shown), the order requirements that are input or selected by the customer on the input screen 40 are listed, and an acceptance button (not shown) that is clicked on when there is no problem with the listed details.

When the customer clicks on the acceptance button (not shown) with an operation of the operating unit 21, the order information generating section 16 generates order information on the basis of the data input in step S1 (step S8). Specifically, a plurality of pieces of data input in the above procedure are put together using an order price as a unit, and a sequence number is given to an order recorded in the sequence number table 184 for each unit to form each piece of order information. Note that, at this point, the sequence number table 184 is given information to distinguish a sequence number used for the order information from an unused number. A plurality of pieces of order information generated in one execution of step S8 form an order information group (hereafter, merely referred to as "order information group") including order information to place a limit order at a first price and order information to place a limit order at a second price, with respect to the same kind of financial product.

The order information generating section 16 records the generated order information group in the order table 181 (step S9). The order information group is recorded in the order table on the basis of the field definition shown in Figure 2. For example, an "ord_seq" field 181b defines a sequence number given in step S8. A "cust_seq" field 181c defines a customer number uniquely specified for each customer. A "style_id" field 181d defines a product name. A "ccy-pair-id" field 181e defines an ID number for each currency pair. A combination of this ID number and a currency pair is recorded in an ID table (not shown) separately provided in the database. An "ord_amnt" field 181f defines an amount input into the order amount input field 402 or 424. A "buy_sell_id" field 181g defines a distinction between a sell order and a buy order selected in an order type select field 404. An "ord_rate" field 181h defines a price calculated on the basis of a price or the like input into the order amount input field 402 or 424. A "limit_time" field 181i defines an order time limit. An "ord_cond" field 181j defines an order type selected in the order type select field 404. A "trail_range" field 181k defines a trailing width input into a trailing width input field 409b or 428. A "through_range" field 181m defines a placing-contracting difference (in this embodiment, it is set beforehand as a uniform price.). A "new_close" field 181n defines a distinction between a fresh order and a settlement order. Note that, although not shown in Figure 2, in the order table 181, fields for defining the other pieces of data input on the input screen 40 are provided. All pieces of data input into the input screen 40 are recorded into these fields of the order table 181.

Through the above procedure, the procedure of receiving an order in this first embodiment is completed.

Note that when at least one of the price of a buy stop order and the price of a sell stop order is determined to be inappropriate price in step S3 ("NO" in step S3), when an amount of margin is less than the total amount of order in step S5 ("NO" in step S5), and when the other requirements are not satisfied in step S7 ("NO" in step S7), the order input receiving section 12 treats the input order as an error, and rejects the reception of the orders (step S10). In this case, order information (to be described hereafter) is not generated, and on the displaying part 22 of the client terminal 2, character information or the like indicating the rejection of receiving the order is displayed.

The processing of steps S2 to S10 in Figure 3 is executed when the confirmation button 413 on the input screen 40 shown in Figure 13 to be described hereafter is clicked on, and the data input and selected on this input screen 40 is provided to the financial product trade managing apparatus 1. An order information group is thereby generated.

### [Principle of Processing Procedure in "Dismissing-first-contract-chance order" and "Settlement trailing stop order"]

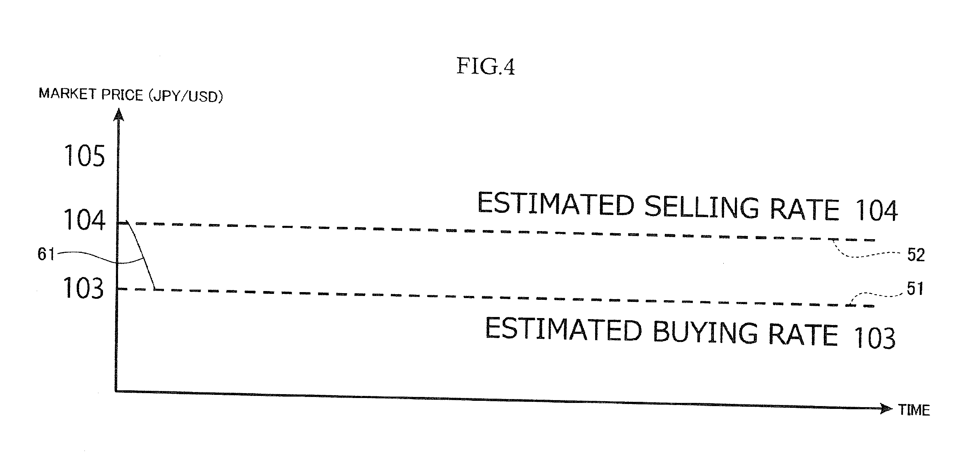

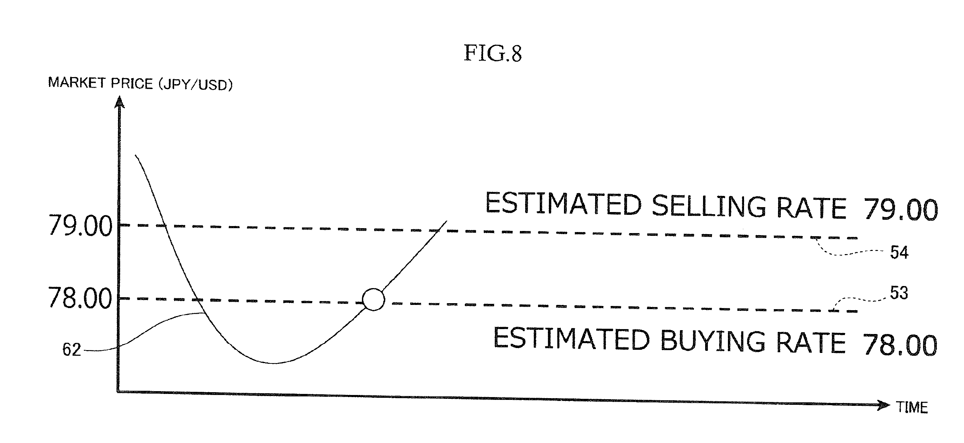

Figure 4 to Figure 7 are schematic diagrams schematically showing the principle of a processing procedure at the time when the financial product trade managing apparatus 1 of this first embodiment performs a transaction using a "dismissing-first-contract-chance order". Figure 8 to Figure 12 are schematic diagrams schematically showing the principle of a processing procedure at the time when the financial product trade managing apparatus 1 of this first embodiment performs a transaction using a "settlement trailing stop order".

The term "dismissing-first-contract-chance order" here refers to an order method in which an order is contracted when a market price falls or rises to pass a fresh order price once before reversing a direction of the fluctuation to reach (or may pass through) the order price again.

In addition, the term "settlement trailing stop order" refers to an order method in which an order is contracted when a market price falls or rises to once pass through a settlement order price, and every time it changes by a trailing width, the settlement order price is also changed by the trailing width, before reversing a changing direction to reach (or may pass through) the settlement order price.

The principles of the processing procedures will be described below on the basis of these drawings.

The financial product trade managing apparatus 1 can use both of a "dismissing-first-contract-chance order" and a "settlement trailing stop order" or can use any one of them.

Note that, in the following description, there will be described a case as an example where a "first order" is a fresh stop order and a "second order" is a settlement stop order, and this is one example of the "first order" or the "second order". For example, the "first order" or the "second order" may be a limit order or may be a market order.

In the following description, the display of "JPY/USD" means the amount of Japanese yen equivalent to one US dollar.

### [Principle of Transaction Procedure in "Dismissing-first-contract-chance order"]

After the completion of the reception, the price information reception managing section 19 of the financial product trade managing apparatus 1 starts and continues obtaining information on a market price of exchange rate. For example, the market price at the time of the completion of the reception is set at 104.00 JPY/USD. An estimated buying rate 51 is a price that is set as a contract price of a fresh order on the basis of the input data on the input screen, and is set at, for example, 103.00 JPY/USD. Placing-contracting difference information is information on a price spread in a high price direction or a low price direction with respect to an intended contract price, and is set at, for example, 0.20 JPY/USD. Note that, in this first embodiment, the placing-contracting difference information is a predetermined price. An estimated selling rate 52 is a price that is set as a criterion of a contract price of a settlement order on the basis of the data input on input screen, and is set at, for example, 104.00 yen. Note that, as will be described hereafter, in this embodiment, it is assumed that the settlement order is not contracted even if a market price 61 matches with the estimated selling rate 52, but is contracted when the market price 61 falls below the price of the estimated selling rate 52.

As shown in Figure 4, consider the case where the market price 61 falls and matches with 103.00 JPY/USD being the estimated buying rate 51. In this phase, the order information generating section 16 does not place a fresh order yet.

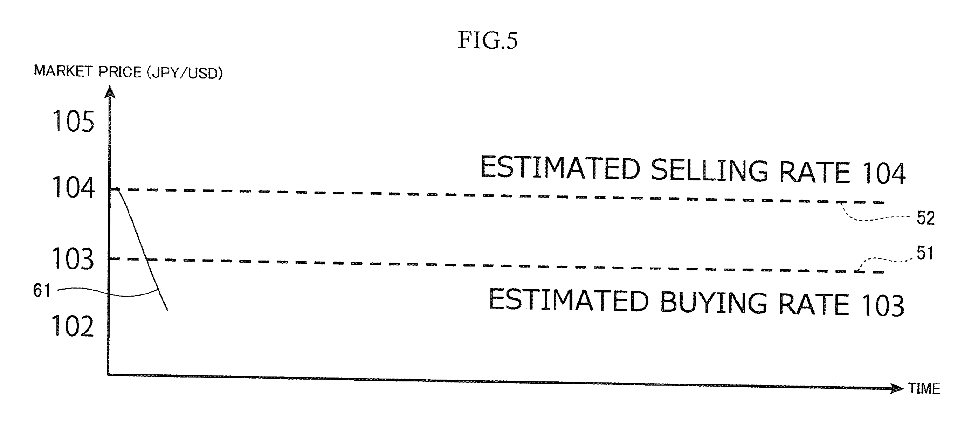

Then, as shown in Figure 5, consider the case where the market price 61 falls to or below 102.80 JPY/USD (i.e., the case where the price spread between the estimated buying rate 51 and the market price 61 becomes equal to or more than 0.20 yen being the placing-contracting difference information). Note that Figure 5 shows a state that the market price 61 falls to 102.70 JPY/USD. In this case, the order information generating section 16 places a fresh stop order at the same price as the estimated buying rate 51 (i.e., 103.00 JPY/USD), when the market price 61 becomes equal to 102.80 JPY/USD.

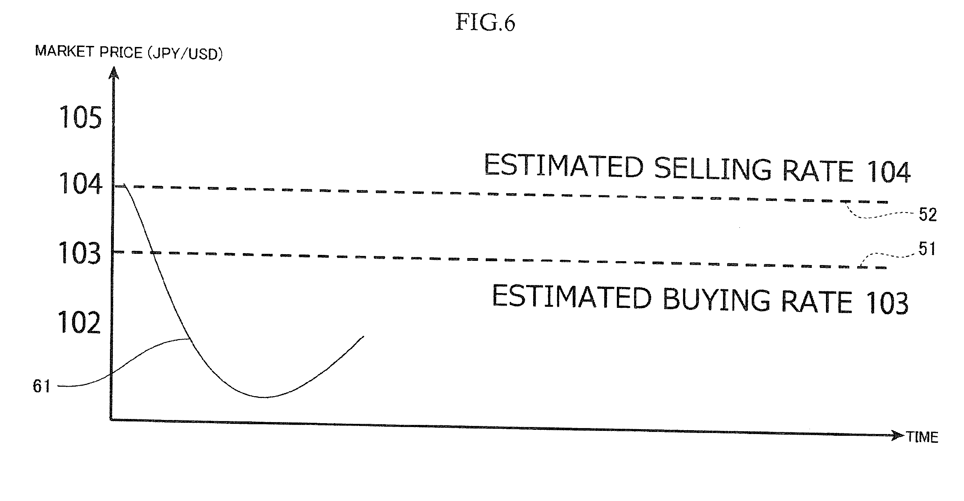

Then, as shown in Figure 6, consider the case where the market price 61 further falls below 102.00 JPY/USD to reach 101.50 JPY/USD and thereafter rises to 102.00 JPY/USD. In this first embodiment, even if the market price sharply falls, the price of the fresh order remains at 103.00 yen and is unchanged.

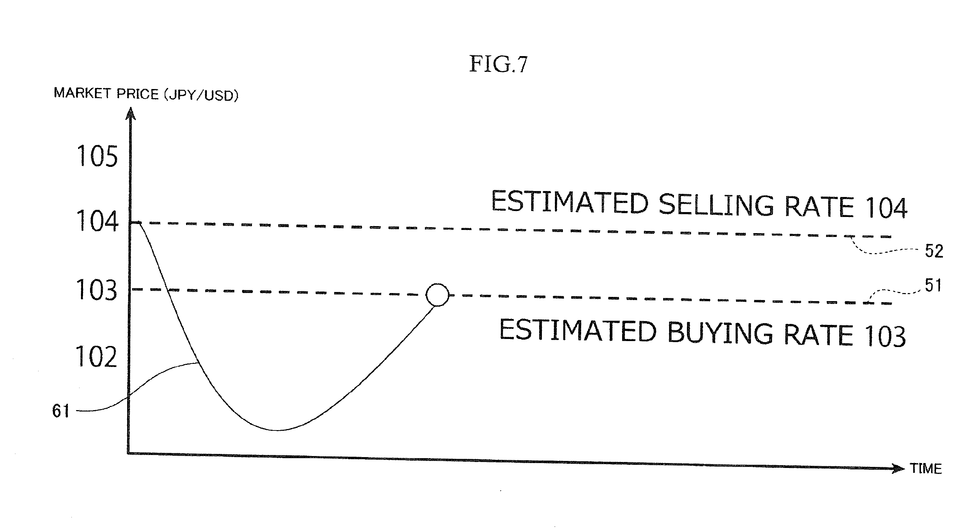

Then, as shown in Figure 7, when the market price 61 further rises to become equal to 103.00 JPY/USD being the estimated buying rate, the contract information generating section 14 causes the fresh order to be contracted.

Note that, in Figure 4 to Figure 7, a buy order is set as the "dismissing-first-contract-chance order," but a sell order also can be set. In this case, a buy order is set as the settlement order.

In such a manner, in the "dismissing-first-contract-chance order," a fresh order is set so as to be contracted when the market price 61 passes through the estimated buying rate 51 and falls (or rises), and thereafter turns around and rises (or falls) to match with the estimated buying rate 51 again. It is thereby possible to make it difficult to bring about an unrealized loss due to a further fall (or rise) of the market price 61 after the contract of the fresh order.

In addition, in the "dismissing-first-contract-chance order," because trailing width information is not provided and the estimated buying rate 51 is not changed in a falling direction even if the market price 61 sharply falls below the estimated buying rate 51 being the contract price of the fresh order, it is possible to contain an unrealized loss due to the acquisition of a position of the fresh order from being brought about, as shown in a column of an Example to be described hereafter. It is thereby possible to contain occurrence of a loss due to fluctuations in the market price 61, and to facilitate gaining a large profit.

Note that a position means an exchange position of a financial product. In addition, a position acquired by contracting a buy order is called "long position," and a position acquired by contracting a sell order is called "short position."

### [Principle of a transaction procedure in "Settlement Trailing Stop Order"]

In the following description, as shown in Figure 8, it is assumed that a market price at the time of the completion of the reception is 80.00 JPY/USD, an estimated buying rate 53 is 78.00 JPY/USD, a placing-contracting difference information is 0.30 JPY/USD, a trailing width information is 0.30 JPY/USD, and an estimated selling rate 54 is 79.00 JPY/USD. Note that, in this first embodiment, a settlement order is contracted when the market price 62 falls below the price of the estimated selling rate 54, rather than when the market price 62 matches with the estimated selling rate 54. In addition, it is assumed that the above-described "dismissing-first-contract-chance order" is used in placing and contracting a fresh order.

As shown in Figure 8, a fresh order is contracted when the market price 62 that is 80.00 JPY/USD at the time of the reception falls to a price lower than a price obtained by subtracting a placing-contracting difference from the estimated buying rate 53, and thereafter becomes again equal to 78.00 JPY/USD being the estimated buying rate 53. Then, as shown in Figure 8, consider the case where the market price 62 further rises to reach 79.00 JPY/USD being the estimated selling rate 54. In this phase, the order information generating section 16 does not place a settlement order yet.

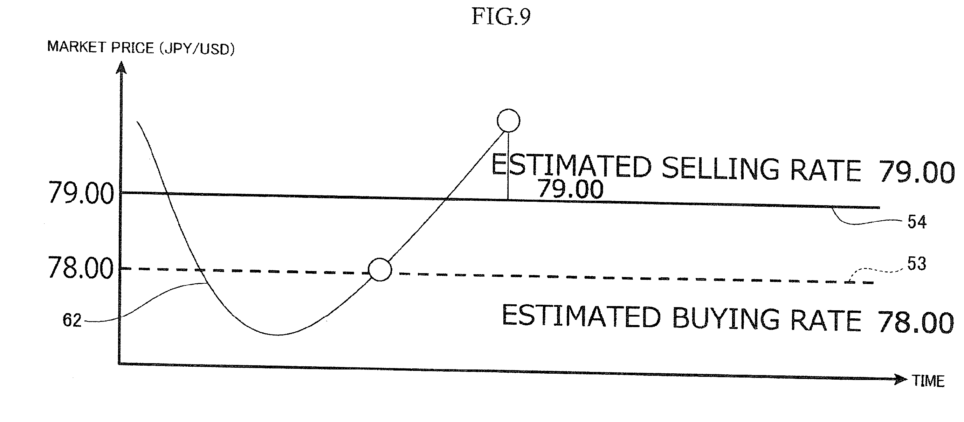

Then, as shown in Figure 9, consider the case where the market price 62 rises to the addition of the estimated selling rate 54 and the trailing width (0.30 yen, here) (79.30 JPY/USD, here) or more. Note that Figure 9 shows the state that the market price 62 rises to 79.30 JPY/USD. In this case, the order information generating section 16 places a trailing stop order as a settlement stop order at the same price (79.00 JPY/USD, here) as the estimated selling rate 54, when the market price 62 becomes equal to 79.30 JPY/USD.

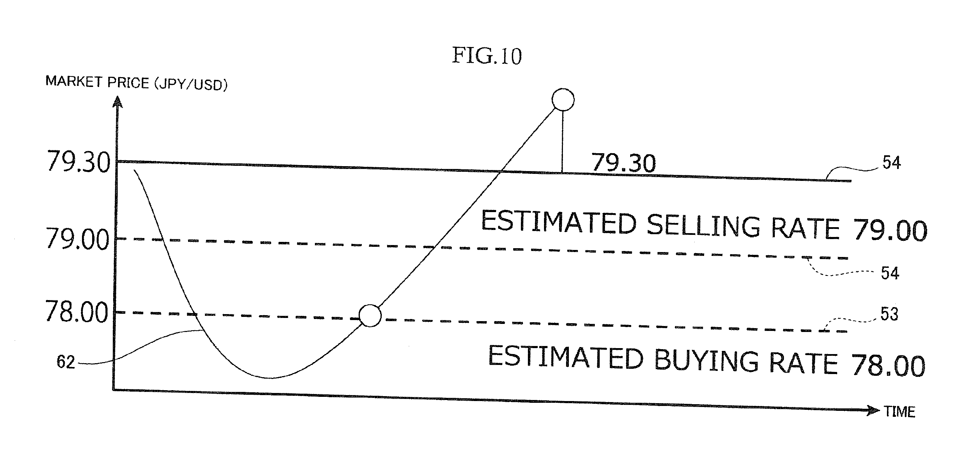

Then, as shown in Figure 10, when the market price 62 further rises by the trailing width to 79.60 JPY/USD or more, the contract information generating section 14 raises the estimated selling rate 54 of the settlement order by the trailing width. In the example of Figure 10, when the market price 62 rises to 79.60 JPY/USD, the estimated selling rate 54 is raised from 79.00 yen to 79.30 yen.

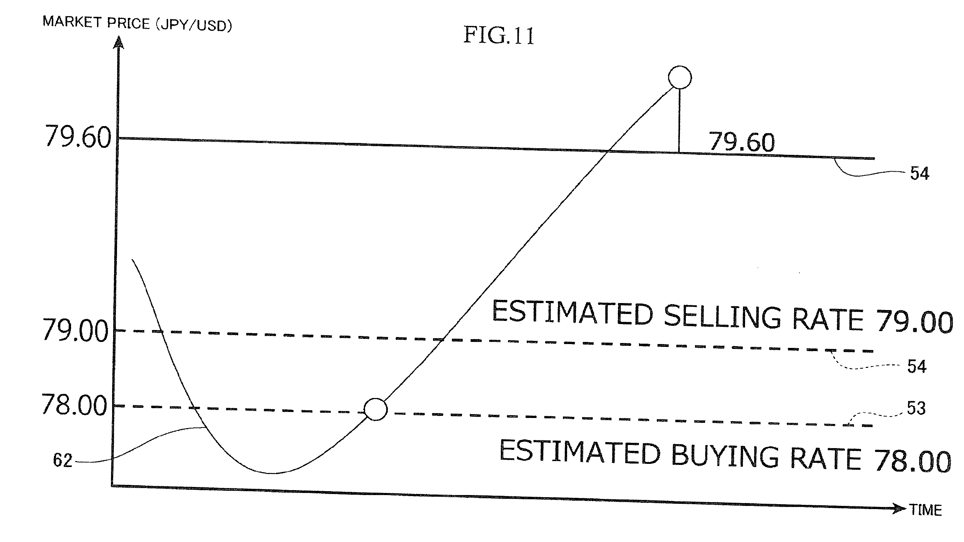

Then, as shown in Figure 11, the market price 62 further rises by the trailing width to 79.90 JPY/USD or more, the contract information generating section 14 raises the estimated selling rate 54 of the settlement order by the trailing width. In the example of Figure 11, when the market price 62 rises to 79.90 JPY/USD, the estimated selling rate 54 is raised from 79.30 yen to 79.60 yen.

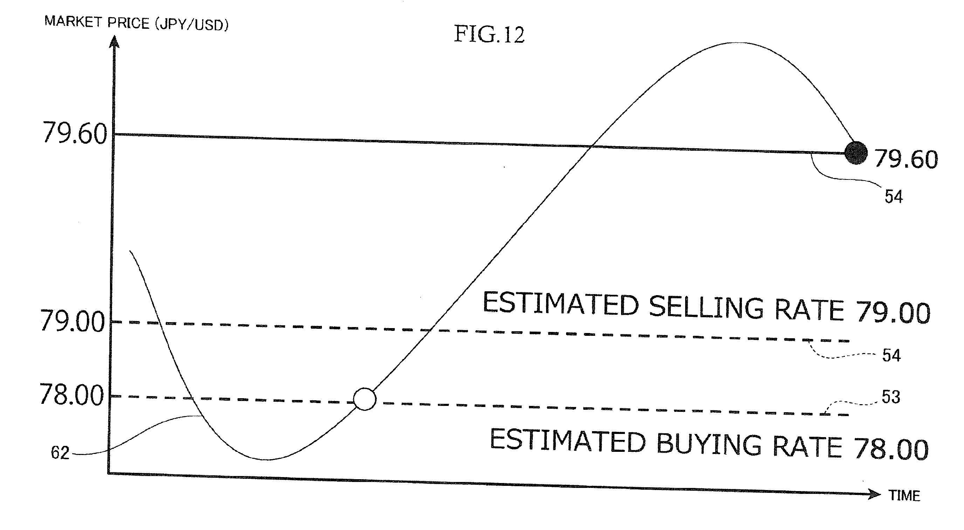

Here, as shown in Figure 12, consider the case where the market price 62 turns around and falls without rising from 79.90 JPY/USD by the trailing width (i.e., without reaching 80.20 JPY/USD). Note that Figure 12 shows the state that the market price 62 falls after rising to 80.00 JPY/USD. In this case, an additional change of the estimated selling rate 54 is not made.

At this point, consider the case where the market price 62 further falls to match with 79.60 JPY/USD being the estimated selling rate 54 of this point. At this point, the order information generating section 16 does not contract the settlement order. It is thereby possible to leave a possibility that the market price 62 turns around and rises again and the estimated selling rate 54 further rises, that is, a profit further increases.

Then, as shown in Figure 12, the contract information generating section 14 contracts the settlement order when the market price 62 becomes equal to a price lower than 79.60 JPY/USD being the estimated selling rate 54.

Note that, in Figure 8 to Figure 12, a sell order is set as the "settlement trailing stop order," but a buy order also can be set. In this case, a sell order is set as the fresh order, namely "dismissing-first-contract-chance order."

In such a manner, in the "settlement trailing stop order," an order is set to be contracted when the market price 62 rises (or falls) passing through the estimated selling rate 54, and thereafter passes through the estimated selling rate 54 again. This increases a possibility of performing a transaction at a price that is close to a price at which a bull market turns into a bear market or close to a price at which a bear market turns into a bull market, which can increases a possibility of gaining a large profit from the transaction. In addition, the settlement order information is set such that, when the price spread between the market price 62 and the estimated selling rate 54 becomes equal to or more than a predetermined trailing width, the estimated selling rate 54 raises (or falls) following trailing the market price 62 on the basis of trailing width information, which increases a possibility that a large profit can be assured when the market sharply fluctuates. This facilitates gaining a large amount of profit in a transaction of a financial product performed using a computer system.

Note that, in the "settlement trailing stop order," a configuration in which, when the market price 62 matches with the estimated selling rate 54, this matching triggers the contract of a settlement order, can be made.

### [Shifting Function]

In the financial product trade managing apparatus 1 or the financial product trade managing system 1A, after contracting a fresh order and a settlement order respectively that have already been placed, a transaction can be performed using processing with a "shifting function" in combination. An order using this "shifting function" can be placed when an additional fresh order or settlement order is placed after a fresh order and a settlement order are each contracted at least once on the basis of the above-described "dismissing-first-contract-chance order," "settlement trailing stop order," various if-done orders (e.g., "repeat if-done order" or "trap repeat if-done order" to be described hereafter), or the like. In an order using this "shifting function", a fresh order is placed being shifted to a price or price range different from the price or price range of an order that is previously placed. This "shifting function" will be described in detail.

### [Specific Processing Procedure of "Dismissing-first-contract-chance order" and "Settlement trailing stop order"]

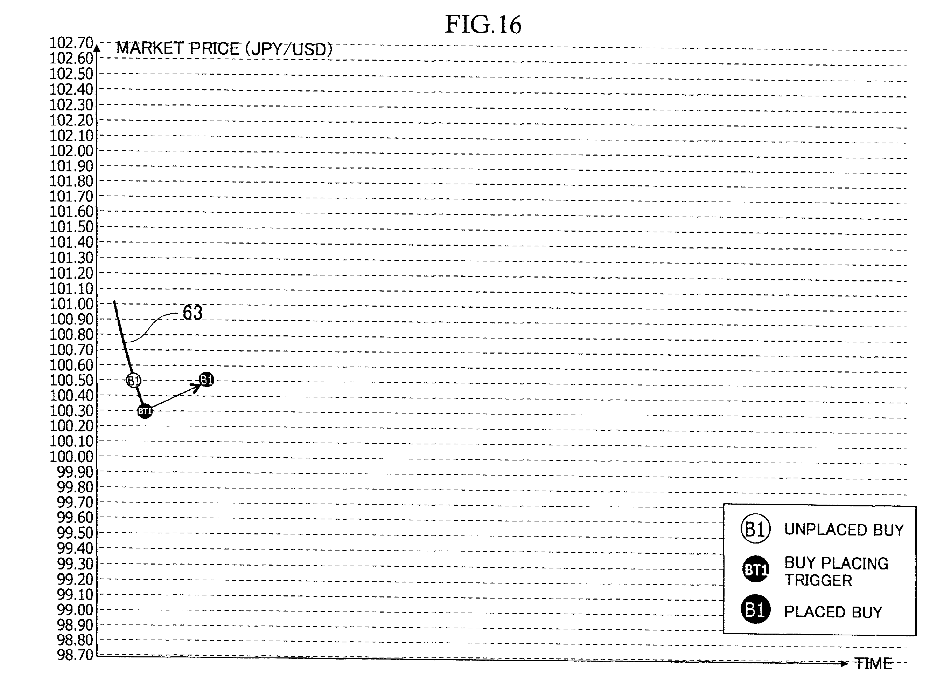

Figure 13 to Figure 22 show a specific processing procedure of a "dismissing-first-contract-chance order" and a "settlement trailing stop order" in the financial product trade managing system 1A of this first embodiment. The specific processing procedure will be described below on the basis of these drawings.

There will be described a case below as an example where a "dismissing-first-contract-chance order" and a "settlement trailing stop order" are combined with a "repeat if-done order". The term "repeat if-done order" here refers to an order form in which an "if-done order" (i.e., an order form in which a position is acquired by a new fresh order and this position by a settlement order is settled) is automatically repeated.

In the processing of step S1. shown in Figure 3, an input screen is displayed on the displaying part 22 of the client terminal 2. Figure 13 is a schematic diagram showing an example of the input screen 40 displayed on the displaying part 22. On the input screen 40 in the drawing, an input screen to place a trap repeat if-done order is shown. The trap repeat if-done order is an order form in which a plurality of fresh orders as "first orders" and a plurality of settlement orders as "second orders" with respect to one kind of a financial product are placed such that the fresh orders have equal price spreads and the settlement orders have equal price spreads. In this trap repeat if-done order, every time a series of processing from the acquisitions of positions by the fresh orders up to the contracts of the corresponding settlement orders is finished, a fresh order and a settlement order having the same prices as those of these fresh orders and settlement orders are newly generated.

The input screen 40 shown in Figure 13 includes a desired trade currency pair selecting button 401 for causing currency pairs that can be traded to be displayed on the screen, an order amount input field 402 to input an order amount of a financial product for each order, a start price input field 403 to input a start price (i.e., an order price to be a criterion for placing each piece of order information) of a fresh order to be placed, an order type select field 404 to input a kind of order to be placed, a number-of-trap input field 405 to input the number of traps (meaning individual orders when a plurality of order processing are placed simultaneously, hereafter, the same applies to the present specification), and a trap price spread input field 406 to input a price spread between a plurality of fresh orders or a plurality of settlement orders.

In addition, the input screen 40 includes a profit amount input field 407 to input the amount of profit that is gained when the pair of one fresh order and one settlement order are contracted, a dismissing-first-contract-chance order selection field 408 to select whether or not to place a "dismissing-first-contract-chance order," a settlement trailing select field 409a to select whether or not to place a "settlement trailing stop order," and a trailing width input field 409b to input a "trailing width". In a settlement trailing stop order according to this first embodiment, a second order price is changed by the "trailing width" every time the market price fluctuates by the "trailing width". That is, a minimum unit of a fluctuation width of the market price and a minimum unit of a fluctuation width of the second order price are the same value. Note that the minimum unit of the fluctuation width of the market price and the minimum unit of the fluctuation width of the second order price may be different values (to be described hereafter).

In addition, the input screen 40 includes a shifting function selection field 410 to select to perform processing by the "shifting function", a stop-loss select field 411a to select whether or not to set a stop-loss price being a price at which stop-loss processing is performed, a stop-loss price input field 411b to input the stop-loss price, a close button 412 to clear the display on the displaying part 22 from the input screen 40 to cancel the input processing, and a confirmation button 413 to cause the order input receiving section 12 to perform confirmation processing on pieces of data that are input/selected in the respective input fields and select fields 401 to 412. Note that the stop-loss processing is to contract a stop order when the market price falls or rises to a predetermined price, being processing of canceling an ongoing transaction or a subsequent transaction.

Figure 13 shows a state that "US dollar/Japanese yen" (trading US dollar by Japanese yen) is selected with the desired trade currency pair selecting button 401", 100 thousand dollars" is input into the order amount input field 402, "100.50 yen" is input into the start price input field, "First order is a fresh buy limit order" is selected in the order type select field 404, "1" is input into the number-of-trap input field 405, "50000 yen" is input into the profit amount input field 407, "0.20 yen" is input into the trap price spread input field 406, the dismissing-first-contract-chance order selection field 408 and the settlement trailing select field 409a are selected (i.e., the checkboxes are checked), "0.20" yen is input into the trailing width input field 409b, the shifting function selection field 410 is brought into an unchecked state, the stop-loss select field 411a is selected, and "100.00" yen is input into the stop-loss price input field 411b.

Note that some or all of the dismissing-first-contract-chance order selection field 408, the settlement trailing select field 409a, the trailing width input field 409b, the stop-loss select field 411a, and the stop-loss price input field 411b may not be displayed on the input screen 40.

That is, the financial product trade managing apparatus 1 may be configured such that a function of one of the "dismissing-first-contract-chance order" and the "settlement trailing stop order" is not provided, or may be configured such that one or both of the "dismissing-first-contract-chance order" and the "settlement trailing stop order" are automatically set to all orders input and placed from the input screen 40. Alternatively, the financial product trade managing apparatus 1 may be configured such that only the settlement trailing select field 409a is provided on the input screen 40, the trailing width input field 409b does not exist, and a settlement trailing price of the "settlement trailing stop order" is uniformly set at a predetermined price. Moreover, the financial product trade managing apparatus 1 may be configured such that no "stop-loss processing" is performed, or may be configured such that only the stop-loss select field 411a is provided on the input screen 40, the stop-loss price input field 411b does not exist, and a "stop-loss price" is uniformly set at a predetermined price.

Furthermore, the financial product trade managing apparatus 1 may be configured such that the shifting function selection field 410 does not exist on the input screen 40, that is, such that a transaction using a "shifting function" (to be described hereafter) is not performed. Alternatively, the input screen 40 may be configured such that a shifting width input field (not shown) is provided in addition to the shifting function selection field 410 so as to allow a customer to freely input and set a shifting width, or may be configured such that a shifting width is uniformly set at a predetermined price like this first embodiment.

As described above, in this first embodiment, since the minimum unit of the fluctuation width of the market price and the minimum unit of the fluctuation width of the second order price are the same values, a customer may only input one kind of "value of trailing width," and therefore the input processing is simple and easy. In contrast, if the unit of the fluctuation width of the market price and the unit of the fluctuation width of the second order price are different values, these two kinds of value of trailing widths are separately input and set.

In addition, in this first embodiment, the input screen 40 is configured such that the start price input field 403 and the profit amount input field 407 are provided, and the order information generating section 16 calculates an order price of settlement order information (to be described hereafter) (i.e., settlement price) on the basis of values input into these input fields 403 and 407. However, instead of such a configuration, a "settlement price input field" to input a settlement price may be provided on the input screen 40, or the input screen 40 may be configured such that a customer can select one of the input of the amount of profit and the input of the settlement price. Alternatively, instead of the amount of profit, namely the sum of the profit, the input screen 40 may be configured such that a spread per currency (e.g., information such as "xx JPY/USD" and "xx points") is input, or may be configured such that other information on a profit is input.

When the confirmation button 413 is clicked on in a state that inputting or selecting are performed on the input fields and the select fields 401 to 411b on the input screen 40 shown in Figure 13, the order information generating section 16 performs calculation using these input values and selected values to generate order information. Then, the order information generating section 16 generates an order information group using a plurality of pieces of order information. The order information group contains, for example, a plurality of fresh orders that are placed at the same time, and information on settlement orders and stop-loss orders corresponding to these respective pieces of fresh order information.

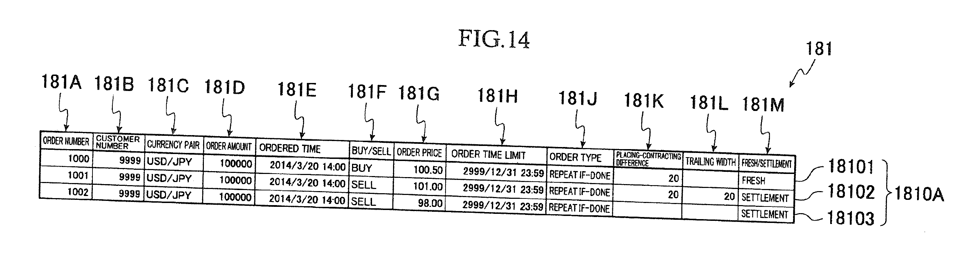

Figure 14 is a table showing an order information group that is generated and recorded in the order table 181 by the order information generating section 16. Note that the image of the table shown in Figure 14 is displayed on the displaying part 22 of the client terminal 2 by the front page distributing section 11.

As shown in Figure 14, the order information group 1810A is formed by fresh order information 18101, settlement order information 18102, and stop-loss order information 18103. Here, the fresh order information 18101 has a high priority rank of contract, and the settlement order information 18102 and the stop-loss order information 18103 have low priority ranks of contract.

As shown in Figure 14, the fresh order information 18101, the settlement order information 18102, and the stop-loss order information 18103 each have an order number 181A as a serial number of the order, a customer number 181B to identify a customer, a currency pair 181C to distinguish a combination of currencies to be traded (e.g., combination of Japanese yen and US dollar), order amount information 181D as a foreign exchange position (hereafter, referred to as "position," the same applies to the present specification) acquired by one order, order time information 181E as a date and time at which the order is placed, buying/selling direction information 181F as flag information to indicate distinction between whether the order is a "sell order" or a "buy order," order price information 181G as information representing a contract price, order expiration information 181H as information representing expiration dates and times of the pieces of order information 18101 to 18103, order type information 181J as flag information representing distinction among order types such as a "market order," an "if-done order," and a "repeat if-done order", placing-contracting difference information 181K, trailing width information 181L, and fresh/settlement information 181M as flag information representing distinction between "fresh order"/"settlement order" of the each piece of order information, or representing between whether or not each piece of order information is a "limit order".

Although not shown in Figure 14, the pieces of order information 18101 to 18103 each include, in addition to these pieces of information 181A to 181M, active/stand-by information, rank information, and contract fulfillment/nonfulfillment information, as pieces of attribute information. Here, the active/stand-by information is flag information representing distinction between whether the order information on a stop order or a limit order is in an active state (i.e., placed state) or in a stand-by state (i.e., unplaced state). The rank information is flag information representing, with respect to each of the pieces of order information 18101 to 18103, distinction between order information in the first rank (i.e., order information to be subjected to ordering processing earlier) and order information in the second rank (i.e., order information subjected to ordering processing after the order of the first rank is contracted). In addition, contract fulfillment/nonfulfillment information is flag information to distinguish between "contracted" and "uncontracted" of each piece of order information. These pieces of attribute information are changed in accordance with the information input from the input screen 40, and recorded in the order table 181 associated with the above-mentioned field definition.

As shown in Figure 14, in each piece of order information 18101 to 18103, information on a contract price is provided as the order price information 181G. As will be described hereafter, a contract price provided in the order price information 181G is changed with the fluctuations in the market price, on the basis of the trailing width information 181L, trailing start price information (not shown), and stop-loss width information (not shown).

As shown in Figure 14, the order price information 181G in the fresh order information 18101 (i.e., information representing a fresh order price) is set on the basis of the value input into the start price input field 403, and in addition, the order price information 181G in the stop-loss order information 18103 (i.e., information representing a stop-loss price) is set on the basis of the value input into the stop-loss price input field 411b. The order price information 181G in the settlement order information 18102 (i.e., information representing a settlement order price) is given by X+(Y/Z), where X denotes the value input into the start price input field 403 (i.e., 100.50 yen), Y denotes the value input into the profit amount input field 407 (i.e., 50000 yen), and Z denotes the value input into the order amount input field 402 (i.e., 100 thousand).

As shown in Figure 14, in this first embodiment, the fresh order information 18101 and the settlement order information 18102 each contain the placing-contracting difference information 181K. The placing-contracting difference information 181K is set beforehand, and is a fixed value that does not fluctuate in response to the market price. In the example of Figure 14, the placing-contracting difference information is set at "20," meaning 0.20 JPY/USD. The placing-contracting difference information is information on a difference between a market price at the time of placing a fresh order and a settlement order (i.e., order placing trigger price) and a market price at the time of contracting the fresh order and the settlement order (i.e., order price). In this first embodiment, the placing-contracting difference information 181K is automatically set at a predetermined value (e.g., 0.20 JPY/USD) by the order information generating section 16. Note that the input screen 40 may be configured to include an input field to input the placing-contracting difference information to allow a customer to freely set the placing-contracting difference information 181K. In addition, the settlement order information 18102 contains the trailing width information 181L. The trailing width information 181L is identical to the value input into the trailing width input field 409b on the input screen 40, and is set at, for example, "20", meaning 0.20 JPY/USD. Note that the trailing width input field 409b may not be provided on the input screen 40 and the value of a trailing width may be fixed at a predetermined value.

Note that, in this first embodiment, the order information generating section 16 uses the trailing width information 181L in the settlement order information 18102 for both the determination of the market price at which each trailing is performed (i.e., trigger price of trailing) and the determination of the amount of fluctuation in an order price for each trailing. For example, in the case where the trailing width information 181L is set at "20", the order price information 181G is set so as to fluctuate (rises or falls) by 0.20 JPY/USD every time the market price fluctuates (rises or falls) by 0.20 JPY/USD. Note that the order information generating section 16 may be configured such that the values of a trailing-trigger price and a trailing width are separately set, or may be configured such that one of them is set beforehand and the other is set using the input screen 40. Furthermore, the order information generating section 16 may be configured such that a spread between a market price at the time of generating the settlement order information 18102 and the order price information 181G is set at the value of the trailing width information 181L. Furthermore, the whole configuration of the financial product trade managing apparatus 1 may be configured to cause order price information 181G to fluctuate (rise or fall) while maintaining a spread between the market price at the time of generating the settlement order information 18102 and the order information price 181G.

In the active/stand-by information (not shown), at the time of generated originally, all the order information 18101 to 18103 are set into an unplaced state, namely a stand-by state.

In addition, at the time of placing a "dismissing-first-contract-chance order" or a "settlement trailing stop order," all the order information 18101 to 18103 are placed as stop orders and contracted. For this reason, all the order information 18101 to 18103 may contain limit order direction distinction information to distinguish between a limit order (the above-described limit order in a forward direction) and a stop order, and may be defined as order information on a stop order with this limit order direction distinction information. By providing such limit order direction distinction information, it is possible to apply a "dismissing-first-contract-chance order" or a "settlement trailing stop order" to various order forms.

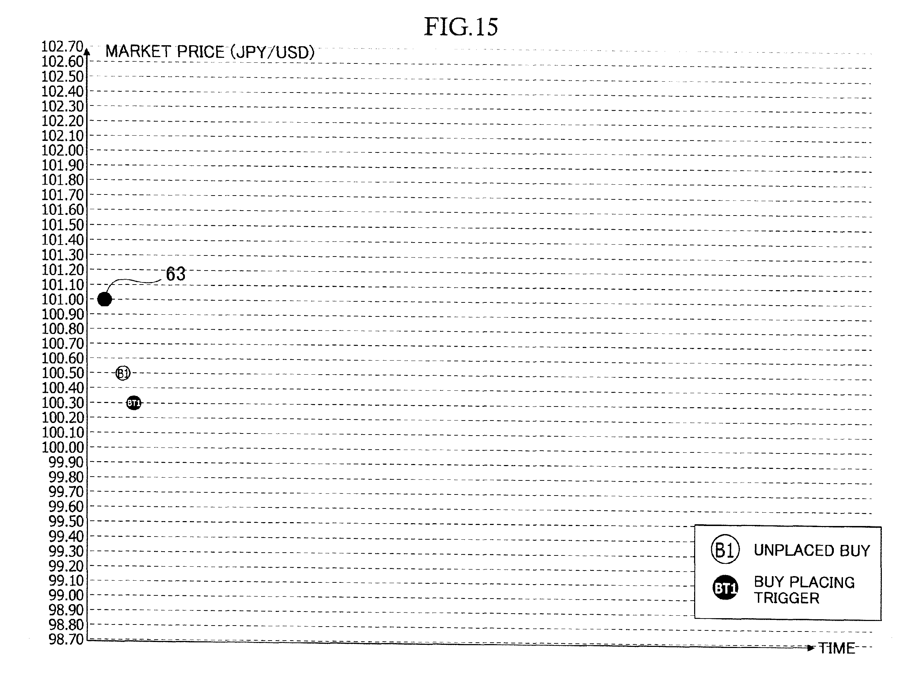

Consider a case where a market price 63 at the time of the completion of receiving an order is 101.00 JPY/USD, as shown in Figure 15. Here, a price at which an order of "buying" is placed (i.e., order placing trigger BT1) is a price obtained by subtracting a placing-contracting difference from a starting price. As described above, the starting price is a value input into the start price input field 403 in Figure 13 (i.e., 100.50 JPY/USD), and in addition, the placing-contracting difference is a value stored in the placing-contracting difference information 181K in Figure 14 (i.e., 0.20 JPY/USD). Therefore, in this first embodiment, when the market price 63 reaches 100.30 JPY/USD, a fresh stop order B1 at 100.50 JPY/USD (i.e., an order to buy dollars at 100.5 JPY/USD) is placed on the basis of the fresh order information 18101.

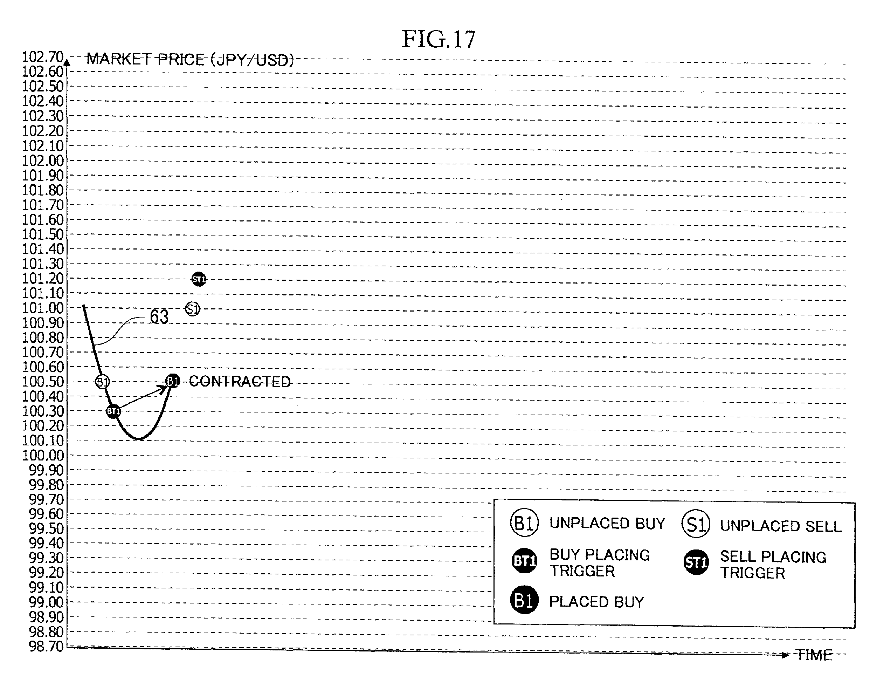

Then, as shown in Figure 17, when the market price 63 turns from falling to rising to reach 100.50 JPY/USD being the starting price again, the fresh order B1 is contracted (i.e., a "buying" corresponding to the fresh order B1 is actually performed). The contract information generating section 14 performs processing of bringing the fresh order information 18101 into a contracted state. Specifically, for example, the contract information generating section 14 sets attribute information (not shown) to set the distinction among contracted/uncontracted/cancel contained in the fresh order information 18101 into a "contracted" state, and rewrites the customer account information table 182.

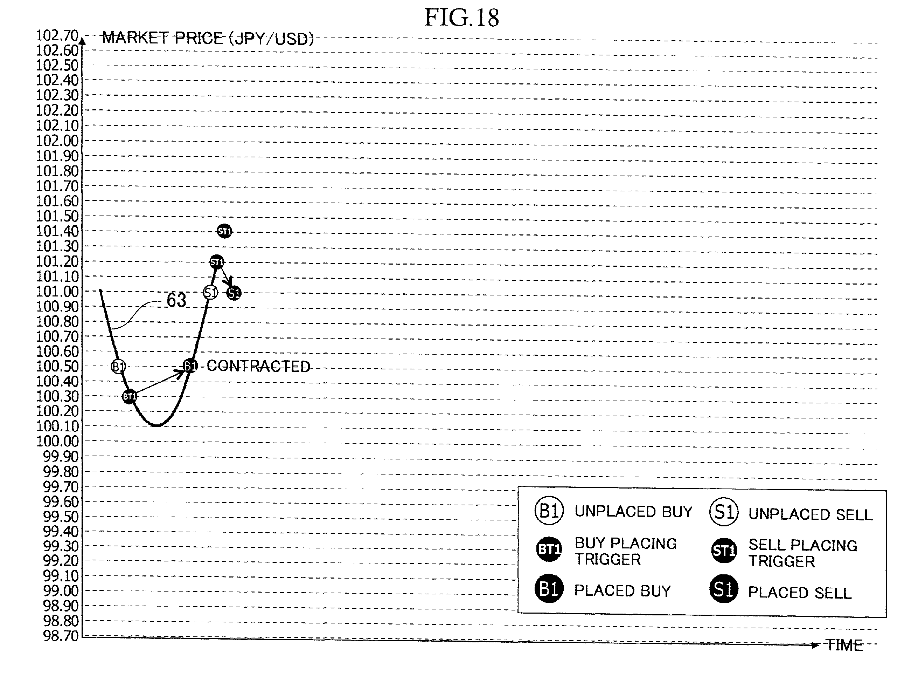

Next, as shown in Figure 18, when the market price 63 further rises to reach a price at which an order of "selling" is placed (i.e., order placing trigger ST1), a settlement stop order S1 is placed on the basis of the settlement order information 18102. Here, the order placing trigger ST1 is a price obtained by adding the placing-contracting difference to the order price of the settlement. As described above, the order price of the settlement is the value of the order price information 181G contained in the settlement order information 18102 (i.e., 101.0 JPY/USD), and in addition, the placing-contracting difference is the value of the placing-contracting difference information 181K (i.e., 0.2 JPY/USD). Therefore, in this first embodiment, the order placing trigger ST1 is 101.20 JPY/USD.

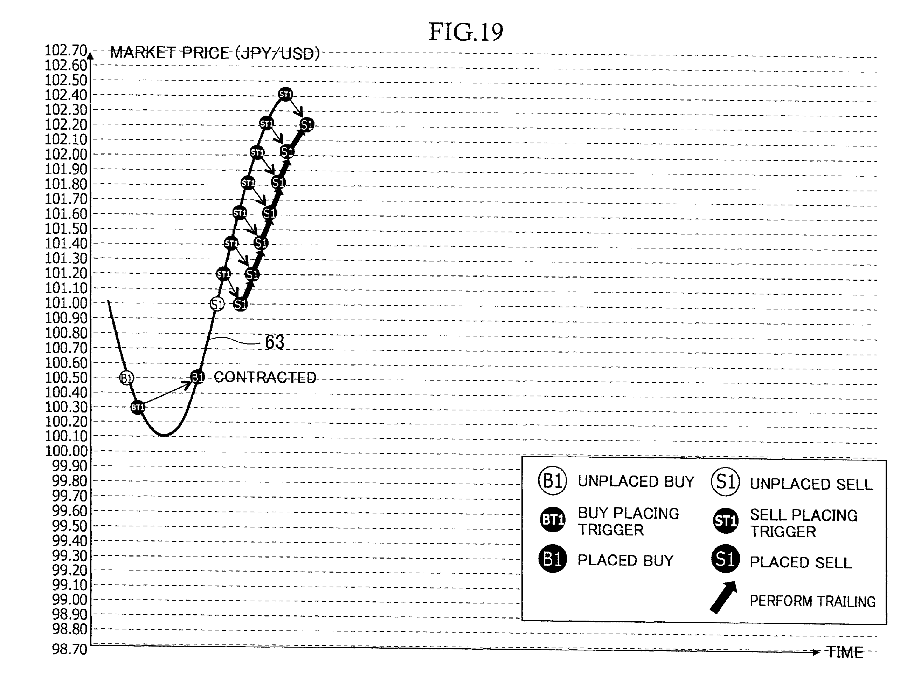

Subsequently, as shown in Figure 19, every time the market price 63 rises by a trailing price spread to reach the order placing trigger ST1 of the "selling", the order price of the settlement rises by a trailing value. As described above, the trailing value is the value of the trailing width information 181L in the settlement order information 18102, and is 0.20 JPY/USD in this first embodiment. In addition, in the example of Figure 19, when a settlement order at 100.00 JPY/USD is first placed when the market price 63 is 101.20 JPY/USD and the market price 63 thereafter reaches 101.40 JPY/USD, this reaching serves as a trigger of the trailing and the settlement order price rises to 101.20 JPY/USD. Furthermore, when the market price 63 reaches 101.60 JPY/USD, this reaching serves as a trigger of the trailing and the settlement order price rises to 101.40 JPY/USD. As a result of repeating similar operations thereafter, the market price 63 reaches 102.40 JPY/USD, this reaching serves as a trigger of the trailing, and the settlement order price rises to 102.20 JPY/USD, which brings about a state shown in Figure 19.

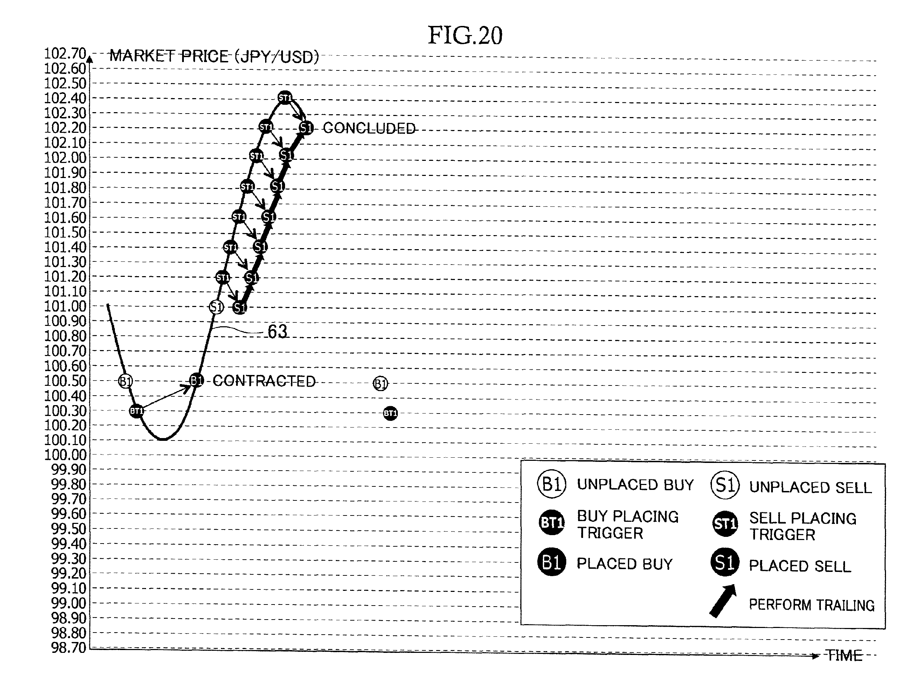

Then, subsequently to this state, when the market price 63 turns from rising to falling as shown in Figure 20 and the market price 63 becomes less than 100.40 JPY/USD, the contract information generating section 14 performs contracting processing on the settlement order information 18102. In this contracting processing, the contract information generating section 14 rewrites the attribute information (not shown) to set distinction among contracted/uncontracted/cancel contained in the settlement order information 18102 to "contracted", and further rewrites the customer account information table 182. Note that Figure 19 and Figure 20 show the state that the market price 63 rises to 102.40 JPY/USD and falls thereafter, and a price of turning from rising to falling may be higher or lower than this. For example, the settlement order is contracted also in a case where the market price turns from rising to falling at 102.30 JPY/USD to falls below 102.00 JPY/USD.

When the fresh order and the settlement order are each contracted, processing of canceling the stop-loss order information 18103 of the order information group 1810A is performed. In this cancel processing, the contract information generating section 14 rewrites the attribute information (not shown) to set distinction among contracted/uncontracted/cancel contained in the stop-loss order information 18103 into "cancel". Note that, after the fresh order is contracted, when the market price 63 falls to an order price of the stop-loss order (this order price is stored in the order price information 181G of the stop-loss order information 18103, and is 100.00 JPY/USD) without rising to the order placing trigger price of the settlement order (101.20 JPY/USD here), the settlement order is subjected to the cancel processing. By this cancel processing, the subsequent transaction (i.e., the transaction of the financial product by the order information group 1810A) is also cancelled. Note that it is possible to continue the transaction without performing this canceling.

As shown in Figure 20, when the fresh order and the settlement order are each contracted, the contract information generating section 14 clears the order information group 1810A containing the contracted fresh order information 18101, and settlement order information 18102 from the order table 181, and the order information generating section 16 generates a new order information group 1810A. The newly generated order information group 1810A is generated also in the same state as that at the time of generating deleted order information group 1810A shown in Figure 14.

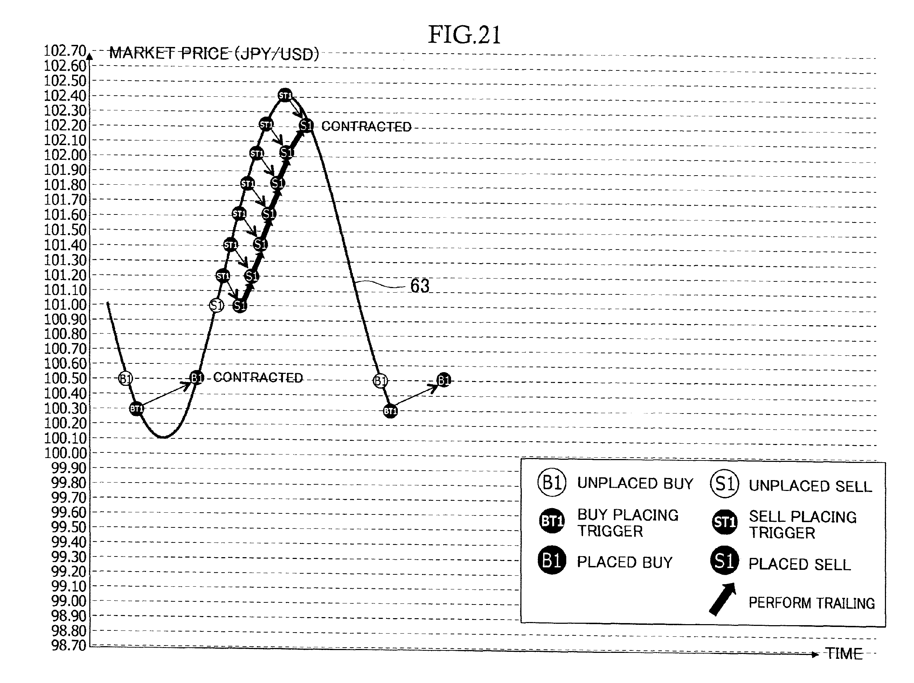

Then, on the basis of the newly generated order information group 1810A, the transaction of the financial product is continued and the transaction similar to the above is repeated. That is, as shown in Figure 21, when the market price 63 of the financial product falls again to reach 100.30 JPY/USD again, this reaching serves as the order placing trigger BT1 and the order information generating section 16 places a fresh order B1 at 100.50 JPY/USD again. Thereafter, when the market price 63 turns from falling to rising again, the contract information generating section 14 contracts the fresh order B1. Furthermore, when the market price 63 rises to reach 101.20 JPY/USD, this reaching serves as a trigger ST1, and the order information generating section 16 places a settlement order S1 at 101.00 JPY/USD. Thereafter, every time the market price 63 rises by 0.20 JPY/USD, the settlement order price is changed. The change of settlement order price is performed by rewriting the order price information 181G in the settlement order information 18102. In addition, when the market price 63 turns from rising to falling to become less than the settlement order price, the contract information generating section 14 perform processing of contracting the settlement order and processing of canceling the stop-loss order. Subsequently, a similar transaction is to be repeated.

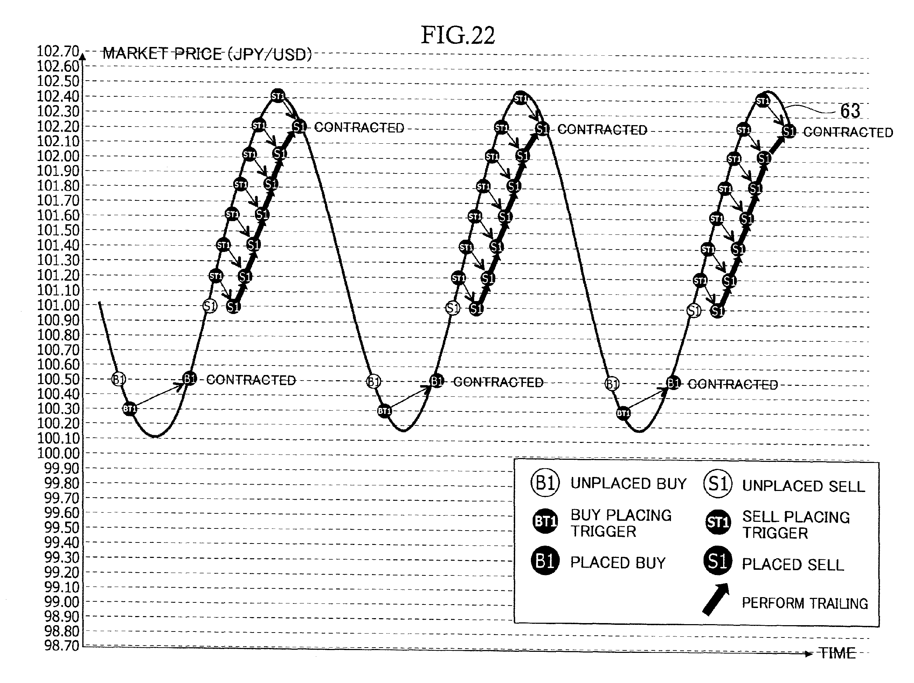

Figure 22 shows a state that, in such a manner, processing of placing a fresh dismissing-first-contract-chance order and contracting the order and processing of placing a settlement trailing stop order and contract the order are repeated three times with the fluctuation in the market price 63. In such a manner, in this embodiment, by alternately performing the processing of a "dismissing-first-contract-chance order" and the processing of a "settlement trailing stop order," a financial transaction of the same details can be performed repeatedly.

As described above, in this first embodiment, a fresh order is contracted after the market price 63 fluctuates (falls or rises) passing through an order price of the fresh order, and thereafter reverses a direction of the fluctuation to pass through the order price again. In addition, the settlement order is contracted after the market price 63 fluctuates (rises or falls) passing through the order price of the settlement order, and thereafter reverses the direction of the fluctuation to pass through the order price again. Therefore, according to this first embodiment, a possibility that a transaction can be performed at a price that is very close to a price at which a bear market turns into a bull market, or very close to a price at which a bull market turns into a bear market. For this reason, according to this first embodiment, a possibility of gaining a large profit by the transaction is sufficiently increased.

In addition, since the order price of the settlement moves in a rising direction or a falling direction on the basis of the trailing width information, it is possible to assure a large profit when the market sharply fluctuates.

In addition, since the change of an order price using trailing width information is performed only by a settlement order, it is possible to contain the occurrence of an unrealized loss due to the acquisition of a position of a fresh order (refer to Example to be described hereafter).

For the reasons above, according to this first embodiment, in a transaction of a financial product using a computer system, the occurrence of a loss with the fluctuations in the market price is contained, and gaining a large profit is facilitated.

In this first embodiment, since an order is placed after a price spread between the market price 63 of a financial product and a fresh order price becomes equal to or larger than a placing-contracting difference, it is possible to reliably contract the order immediately after a bull market changes into a bear market or immediately after a bear market changes into a bull market, which facilitates gaining a large profit.

In this first embodiment, the placing-contracting difference is a fixed value that is preset beforehand, which simplifies inputting an order.

In this first embodiment, a settlement order is contracted after the market price reverses the direction of the fluctuation, reaches a settlement order price again, and further passes through the settlement order price. That is, the settlement order is not contracted simply when the market price matches with the settlement order price. According to this first embodiment, it is thereby possible to reduce a possibility that the settlement is made after the market price reverses the direction of the fluctuation, which consequently facilitates gaining a large profit.

In this first embodiment, after processing based on fresh order information 18101 (i.e., fresh order) and processing based on settlement order information 18102 (i.e., settlement order) are finished, next fresh order information 18101 and settlement order information 18102 are further generated automatically. Therefore, according to this first embodiment, it is possible to continuously perform a transaction and gain a large amount of profit on the basis of only simple processing.

In this first embodiment, since an order is placed or contracted by generating fresh order information 18101 and settlement order information 18102 as needed, it is possible to reliably perform a transaction of a financial product.

Note that, in this first embodiment, the fresh order information 18101 is a buying fresh order and the settlement order information is a selling settlement order, but the fresh order information 18101 can be a selling fresh order and the settlement order information can be a buying settlement order (hereafter, the same applies to all the embodiment).

### [Second Embodiment of the Present Invention]

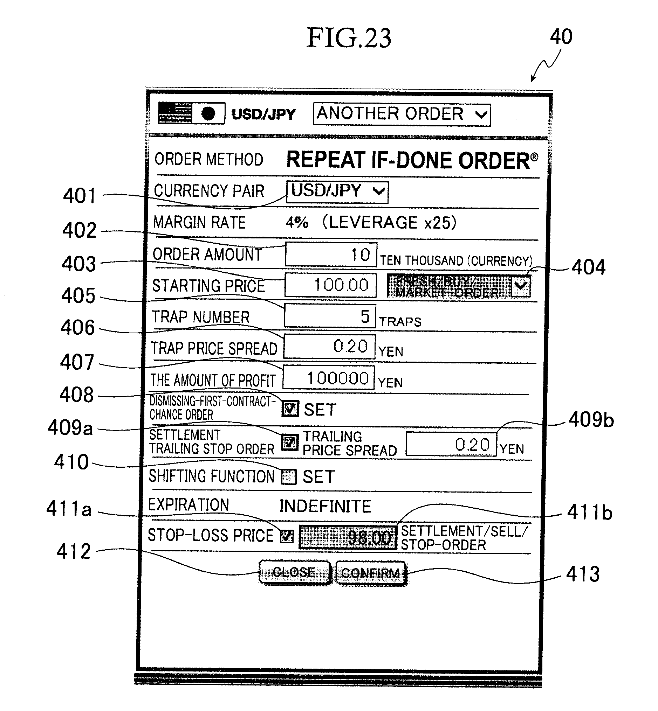

Figure 23 to Figure 33 show a second embodiment of the present invention.

This second embodiment describes an example in which a "dismissing-first-contract-chance order" and a "settlement trailing stop order" are applied to a "trap repeat if-done order". The "trap repeat if-done order" is an order method in which, with respect to the same financial product, a plurality of series of repeat if-done orders each having a different fresh order price and settlement order price are performed simultaneously in parallel.

A configuration and specific processing details according to this second embodiment will be described below. Here, there will be described a case where an order is placed such that a "first order" is a fresh order of an if-done order and "second order" is a settlement order of the if-done order.

The system configuration of this second embodiment is the same as that of the first embodiment, and at the time of the processing of step S1 shown in Figure 3, an input screen is displayed on a displaying part 22 of a client terminal 2. Figure 23 is a schematic diagram showing an example of the input screen 40 displayed on the displaying part 22 at this point. This input screen 40 differs from the input screen 40 of the first embodiment of the present invention shown in Figure 13, and "5" is input into a number-of-trap input field 405. In addition, there is another difference from the first embodiment in that "100000" yen is input into a profit amount input field 407.

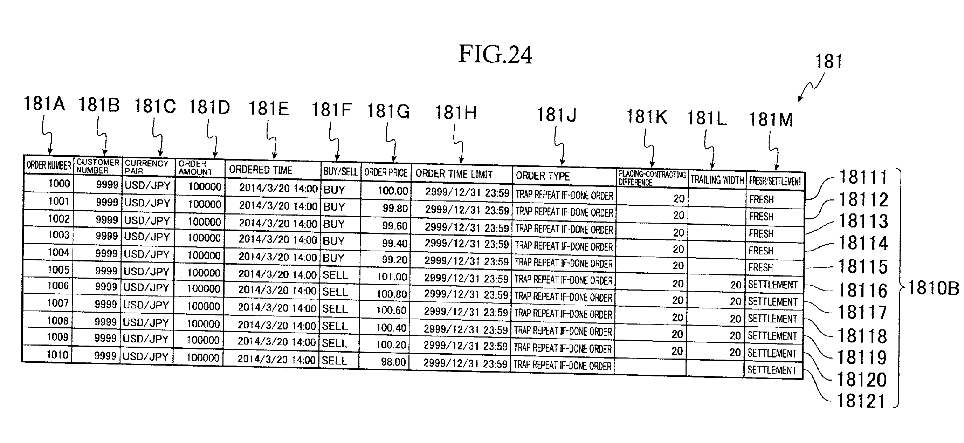

When a confirmation button 413 is clicked on in a state shown in Figure 23, the order information generating section 16 generates an order information group 1810B shown in Figure 24.

Figure 24 is a table showing an order information group that is generated and recorded in the order table 181 by the order information generating section 16. Note that the image of the table of the mode shown in the drawing is displayed on the displaying part 22 of the client terminal 2 by the front page distributing section 11.

This order information group 1810B is generated including pieces of fresh order information and pieces of settlement order information, each number of which is a number input into the number-of-trap input field 405 (i.e., 5). That is, the order information group 1810B includes the five pieces of fresh order information 18111, 18112, 18113, 18114, and 18115, and the five pieces of settlement order information 18116, 18117, 18118, 18119, and 18120, and one piece of stop-loss order information 18121.

The configuration of each of the pieces of fresh order information 18111 to 18115 is similar to that of the fresh order information 18101 of the first embodiment. In addition, the configuration of each of the pieces of settlement order information 18116 to 18120 is similar to that of the settlement order information 18102 of the first embodiment. Furthermore, the configuration of the stop-loss order information 18121 is similar to that of the stop-loss order information 18103 of the first embodiment.

As shown in Figure 24, the order information generating section 16 specifies 100.00 JPY/USD input into a start price input field 403 as a base price of a fresh order on the basis of input information on the input screen 40 shown in Figure 23, and sets this price to an order price information 181G of the fresh order information 18111. Then, the order information generating section 16 generates the pieces of fresh order information 18112 to 18115 such that 0.20 JPY/USD being a value input into a trap price spread input field 406 becomes price spreads between the pieces of fresh order information 18112 to 18115. That is, as shown in Figure 24, the pieces of order price information 181G in the fresh order information 18111 to 18115 are set at 100.00 JPY/USD, 99.80 JPY/USD, 99.60 JPY/USD, 99.40 JPY/USD, and 99.20 JPY/USD, respectively.

In addition, the order information generating section 16 specifies the order amounts of the pieces of settlement order information 18116 to 18120 such that the amount of profit when the corresponding fresh order and settlement order (e.g., the fresh order information 18111 and the settlement order information 18116) are contracted becomes equal to an amount input into a profit amount input field 407 (100000 yen in Figure 23). That is, the order amounts of the pieces of settlement order information 18116 to 18120 are set such that a value obtained by dividing a value input into the profit amount input field 407 by a value input into an order amount input field 402 (100000 dollars in Figure 23), which is 1.00 JPY/USD, is set as a spread between a corresponding fresh order and a settlement order. In the example of Figure 24, the pieces of order price information 181G in the settlement order information 18116 to 18120 are set at 101.00 JPY/USD, 100.80 JPY/USD, 100.60 JPY/USD, 100.40 JPY/USD, and 100.20 JPY/USD, respectively. The other configuration is the same as that of the first embodiment of the present invention.

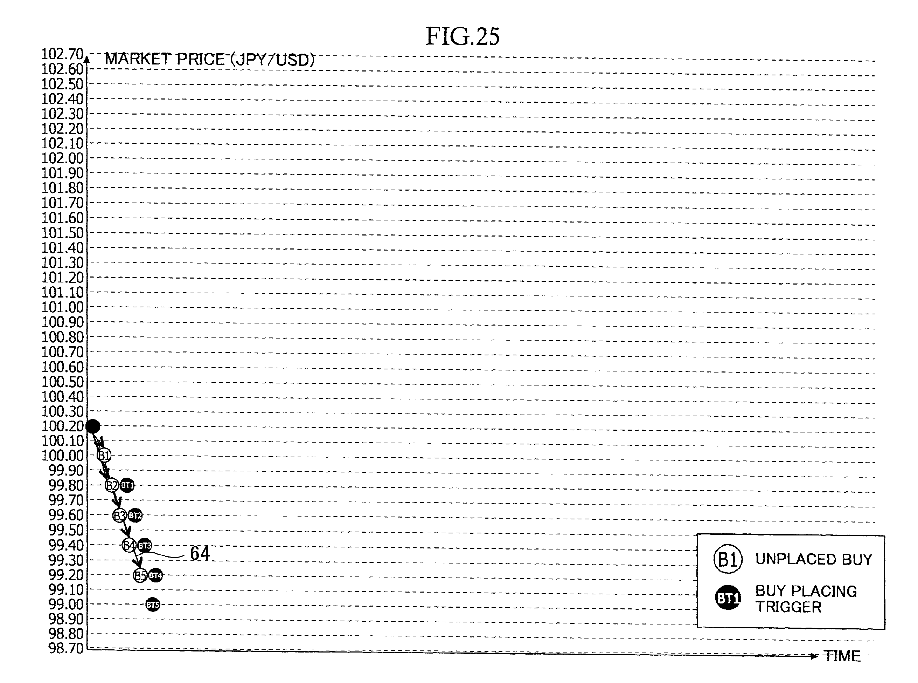

In this second embodiment, ordering processing and contracting processing of each fresh order or settlement order are the same as those of the processing on a fresh order or a settlement order of the first embodiment of the present invention. For example, assume that a market price 64 at the time of the completion of receiving an order is a 100.20 JPY/USD (a filled circle portion on the left side of the drawing), as shown in Figure 25. In this example, buy order placing triggers of the pieces of fresh order information 18111 to 18115 are 99.80 JPY/USD, 99.60 JPY/USD, 99.40 JPY/USD, 99.20 JPY/USD, and 99.00 JPY/USD, respectively.

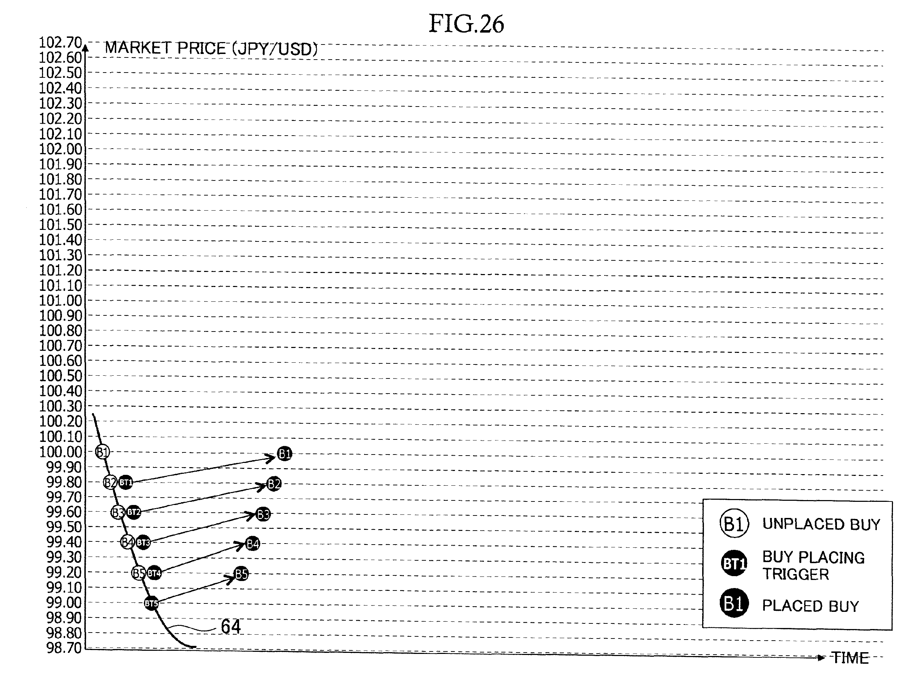

Subsequently, as shown in Figure 26, assuming that the market price 64 gradually falls from 100.20 JPY/USD, a fresh order B1 of the fresh order information 18111 is placed by an order placing trigger BT1, when the market price 64 is 98.80 JPY/USD. Furthermore, when the market price 64 becomes equal to 98.60 JPY/USD, a fresh order B2 based on the fresh order information 18112 is placed by an order placing trigger BT2. Similarly, with the fall of the market price 64, fresh orders B3, B4, and B5 of the pieces of fresh order information 18113, 18114, and 18115 are consecutively placed. Note that Figure 26 shows a state that the market price 64 falls to 98.70 yen per dollar, but there is a case where only some of the fresh orders B1 to B5 are placed according to the circumstance of the fall of the market. For example, in Figure 26, in the case where the market price falls to 99.10 JPY/USD and immediately thereafter turns around and rises, the market price 64 does not reach an order placing trigger BT5, and the fresh order B5 of the fresh order information 18115 may thereby remain unplaced. In this case, since the number of placed fresh order is only four, the number of transactions in each of which both a fresh order and a settlement order are completed is four or less.

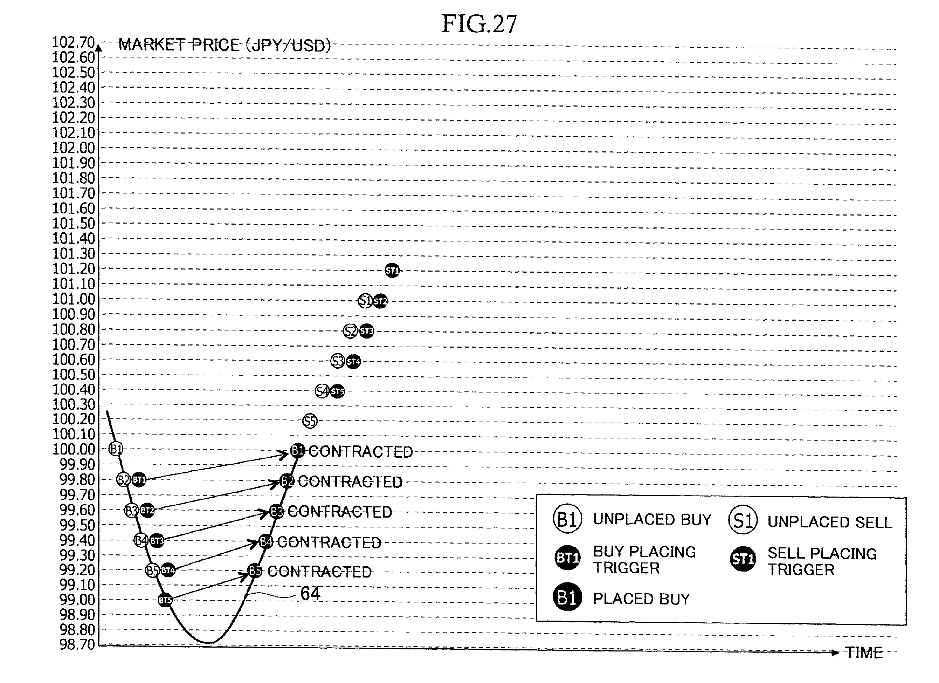

Thereafter, as shown in Figure 27, when the market price 64 rises to 99.20 JPY/USD, 99.40 JPY/USD, ..., and 100.00 JPY/USD, the fresh orders B5, B4, B3, B2, and B1 are consecutively contracted.

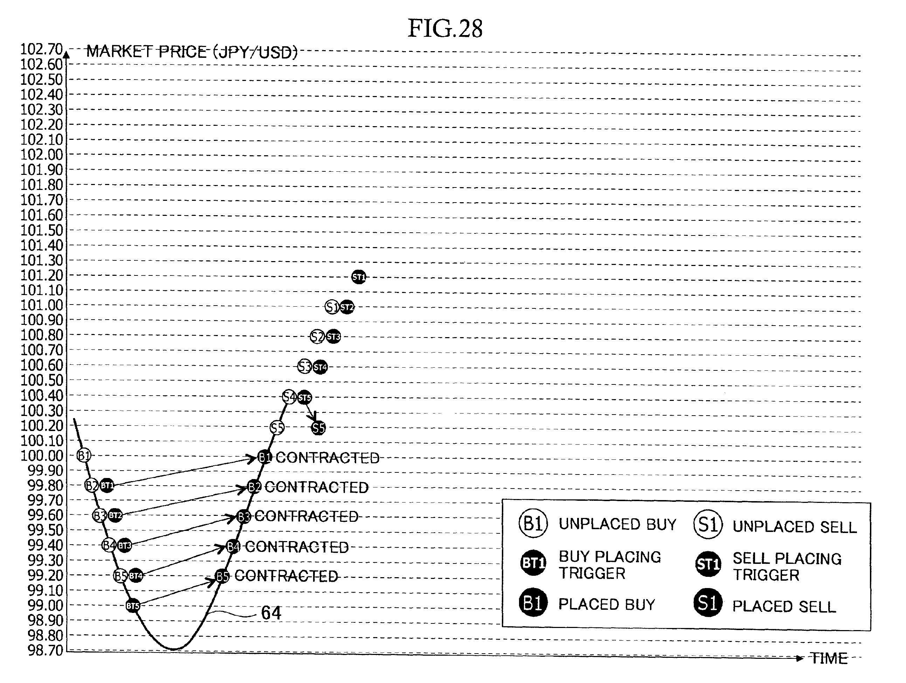

Subsequently, as shown in Figure 28, when the market price 64 further rises to reach 100.20 JPY/USD being the order price of the settlement order S5, the order is however not placed at this point. Then, when the market price 64 further rises by 0.20 JPY/USD to reach 101.40 JPY/USD, this reaching serves as an order placing trigger ST5, and the settlement order S5 is placed.

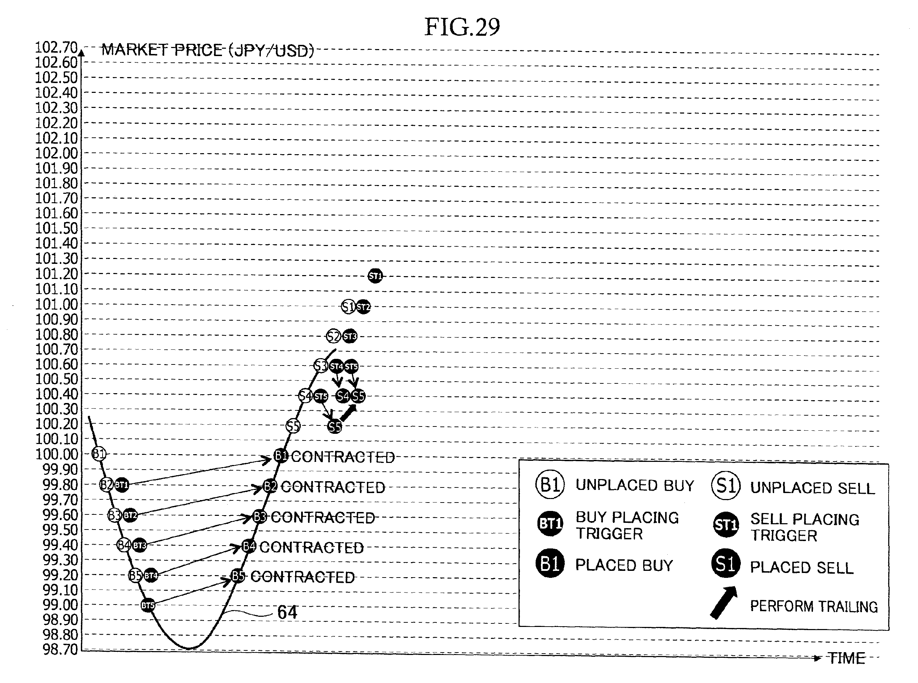

Subsequently, as shown in Figure 29, when the market price 64 further rises by 0.20 JPY/USD to reach 100.60 JPY/USD, this reaching serves as an order placing trigger ST4, and a settlement order S4 having an order price of 100.40 yen is placed. At the same time, this reaching serves as the trigger ST5, and the order price of the settlement order S5 rises by 0.20 JPY/USD. Therefore, the order prices of the settlement orders ST4 and ST5 both become equal to 100.40 yen.

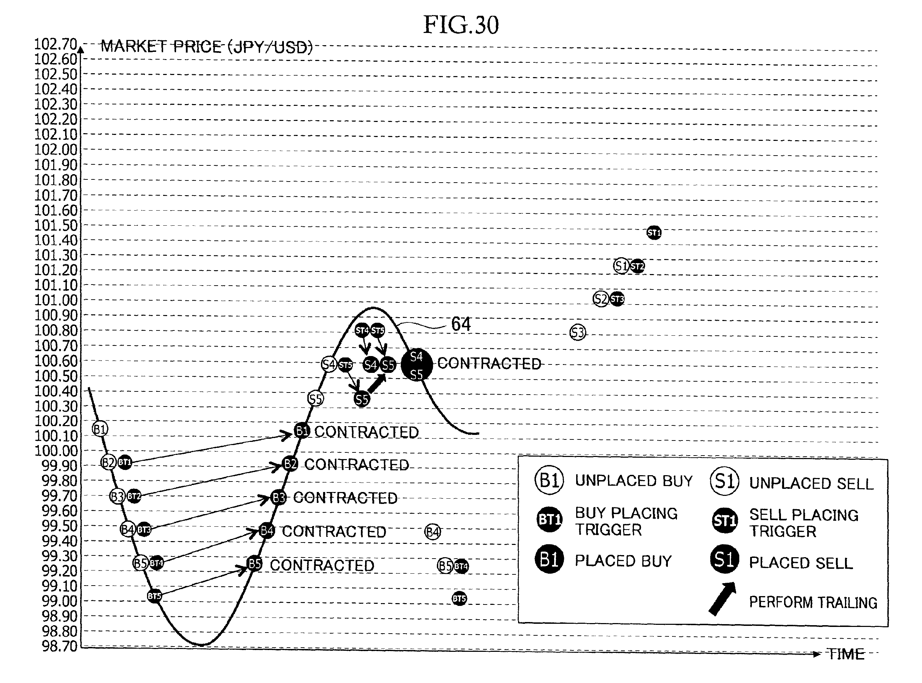

Subsequently, as shown in Figure 30, when the market price 64 turns from rising to falling to become less than 100.60 JPY/USD, the contract information generating section 14 performs processing of contracting the settlement orders S4 and S5. This concludes the transaction of the respective if-done orders by the fresh orders B4 and B5 based on the pieces of fresh order information 18114 and 18115, and by the settlement orders S4 and S5 based on the pieces of settlement order information 18119 and 18120. Subsequently, the order information generating section 16 newly generates fresh orders B4 and B5 and settlement orders S4 and S5 that have the same details as the contracted fresh orders B4 and B5, and settlement orders S4 and S5. Figure 30 shows the fresh orders B4 and B5 that are to be newly generated and placed. The newly generated fresh orders B4 and B5, or settlement orders S4 and S5 are placed and contracted with the same details as the contracted fresh orders B4 and B5, or settlement orders S4 and S5.

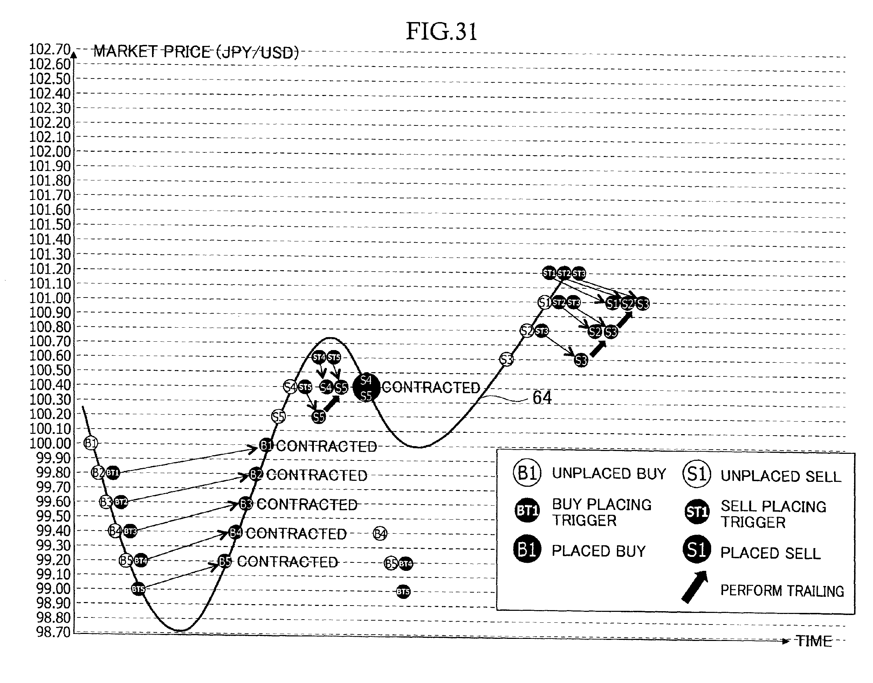

Subsequently, as shown in Figure 31, when the market price 64 turns from falling to rising again and keeps rising, settlement orders S3, S2, and S1 of the pieces of settlement order information 18118, 18117, and 18116 are consecutively placed on the basis of order placing triggers ST3, ST2, and ST1. In addition, every time the market price 64 rises by 0.20 JPY/USD, the order prices of the settlement orders S3, S2, and S1 rise by 0.20 JPY/USD. Figure 31 shows a state that the market price 64 rises to 101.20 JPY/USD, and all the order prices of the settlement orders S1, S2, and S3 become equal to 101.00 JPY/USD.

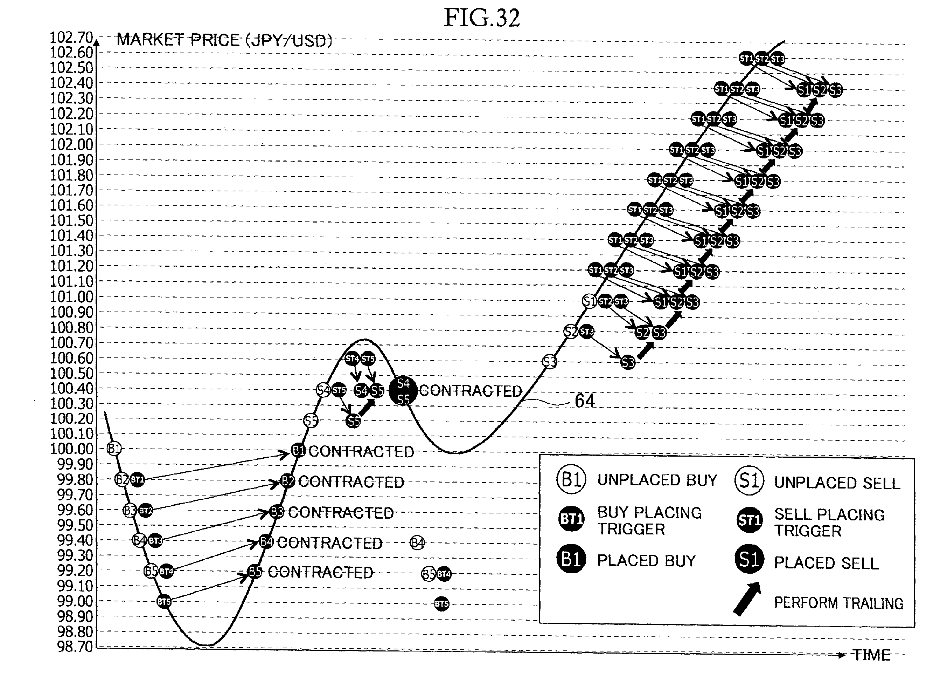

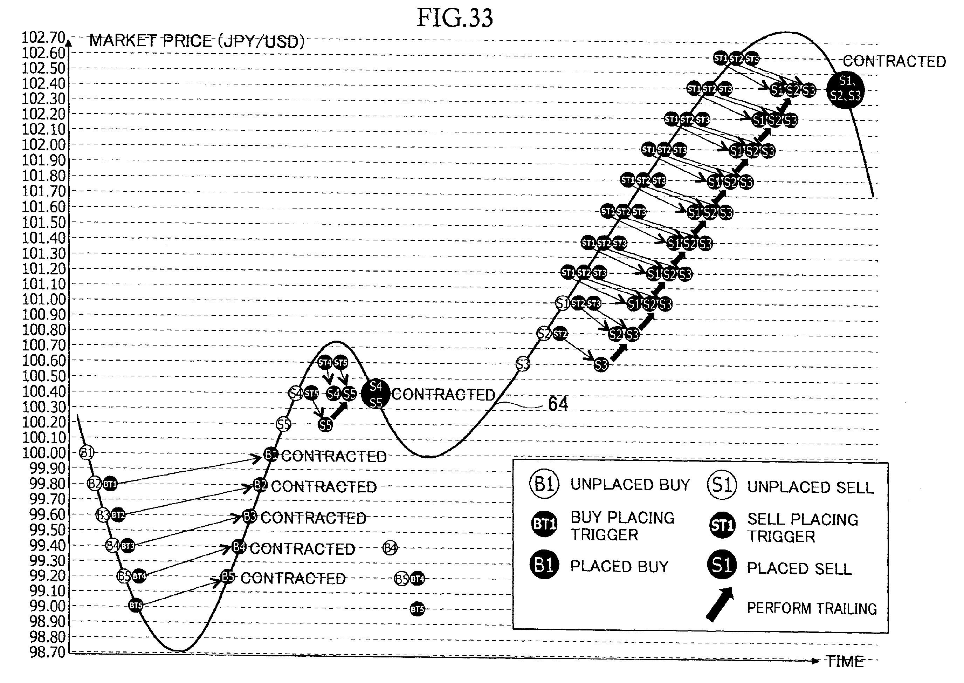

Next, as shown in Figure 32, when the market price 64 further keeps rising, with the rising, the order prices of the settlement orders S1, S2, and S3 consecutively also rise by 0.20 JPY/USD. Then, as shown in Figure 33, when the market price 64 turns from rising to falling to become less than the order prices of the settlement orders S1, S2, and S3 (102.40 JPY/USD in Figure 33), the contract information generating section 14 contracts the settlement orders S1, S2, and S3. The transactions of the if-done order by the fresh orders B1, B2, and B3 of the pieces of fresh order information 18111, 18112, and 18113 and the settlement orders S1, S2, and S3 of the pieces of settlement order information 18116, and 18117, and 18118 are thereby each concluded. Subsequently, the order information generating section 16 newly generates the same fresh orders B1, B2, and B3 as the contracted fresh orders B1, B2, and B3 and the same settlement orders S1, S2, and S3 as the contracted settlement orders S1, S2, and S3, and on the basis of the newly generated fresh orders B1, B2, and B3 and settlement orders S1, S2, and S3, places and contracts orders having the same details as those of the contracted fresh orders B1, B2, and B3 and settlement orders S1, S2, and S3.

In such a manner, in this second embodiment, a plurality of fresh orders are simultaneously generated using the plurality of pieces of fresh order information 18111 to 18115, and a plurality of settlement orders are simultaneously generated using the plurality of pieces of settlement order information 18116 to 18120. It is thereby possible to diversify an order into a plurality of prices, and therefore to reduce a risk in the case where the market fluctuates unexpectedly.

In this second embodiment, although there is described the case as an example where a plurality of series of repeat if-done orders are simultaneously performed in parallel, for example, this second embodiment can be also applied to an order method or the like for performing in parallel a plurality of kinds of processing in which a first order (e.g., a fresh order of an if-done order) and a second order (e.g., an settlement order of the if-done order) are each performed only once (hereafter, referred to as "trap trade order"). In this case, it is preferable that the input screen 40 is set to have a configuration in which a "trap trade order" and a "trap repeat if-done order" are selectable. Note that this "trap trade order" can be configured such that a transaction of an if-done order is performed with the contract of one second order with respect to the contracts of a plurality of first orders, or can be configured such that an if-done order is contracted with the contracts of a plurality of second orders with respect to the contract of one first order.

### [Third Embodiment of the Present Invention]

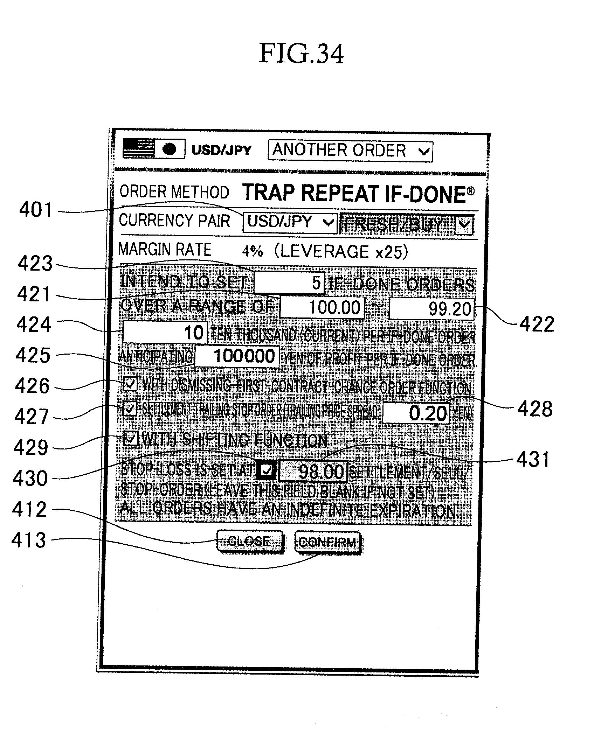

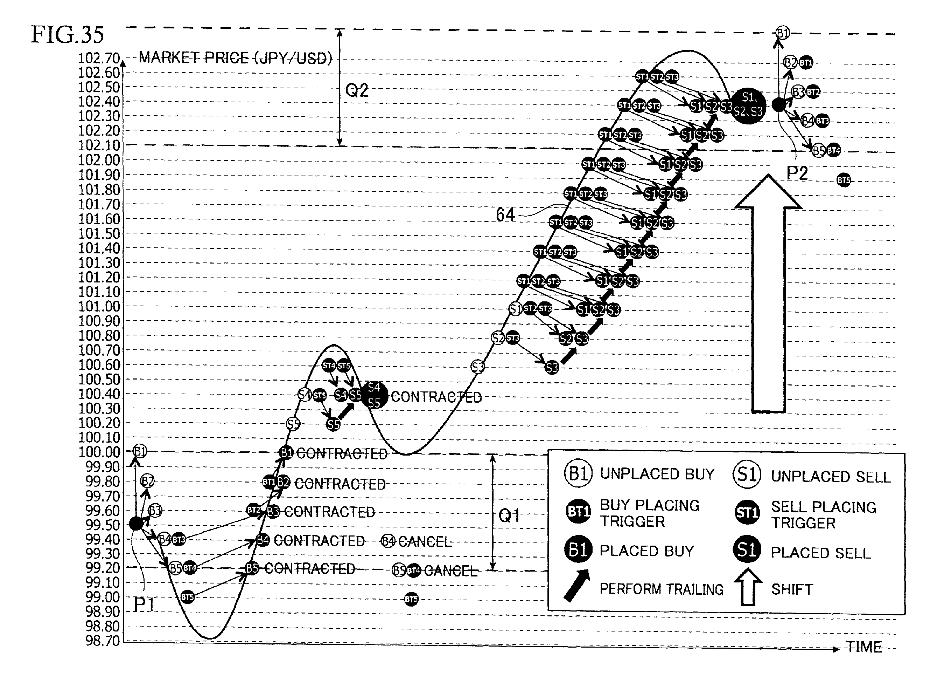

Figure 34 and Figure 35 show a third embodiment of the present invention.

This third embodiment is an example in which, as with the above-described second embodiment, a "dismissing-first-contract-chance order" and a "settlement trailing stop order" are applied to a "trap repeat if-done order." Note that, in this third embodiment, an input screen displayed by a displaying part 22 is different from those of the above-described first and second embodiments. Furthermore, this third embodiment differs from the above-described first and second embodiments in that a shifting function is performed.

The configuration and the specific processing details of this third embodiment will be described below. Here, the description will be made on the basis of a configuration in which a "first order" is placed as a fresh order of an if-done order, a "second order" is placed as a settlement order of the if-done order, a transaction is performed as a "trap repeat if-done order" similar to that of the second embodiment, and a "shifting function" is further performed.

The system configuration of this third embodiment is the same as those of the first and second embodiments, and at the time of the processing of step S1 shown in Figure 3, an input screen is displayed on a displaying part 22 of a client terminal 2. Figure 34 is a schematic diagram showing an example of the input screen 40 displayed on the displaying part 22 at this point. This input screen 40 includes, instead of the order amount input field 402, the start price input field 403, and the trap price spread input field 406 on the input screen 40 of the first embodiment of the present invention shown in Figure 13, a higher limit price input field 421 and a lower limit price input field 422. A number-of-trap input field 423, an order amount input field 424, a profit amount input field 425, a dismissing-first-contract-chance order selection field 426, a settlement trailing select field 427, a trailing width input field 428, a shifting function selection field 429, a stop-loss select field 430, a stop-loss price input field 431, a close button 412, and a confirmation button 413 each have the same configurations as those of the number-of-trap input field 405, the order amount input field 402, profit amount input field 407, the dismissing-first-contract-chance order selection field 408, the settlement trailing select field 409a, the trailing width input field 409b, the shifting function selection field 410, the stop-loss select field 411a, the stop-loss price input field 411b, the close button 412, and the confirmation button 413 of the second embodiment. In this third embodiment, a state that 100.00 JPY/USD is input into the higher limit price input field 421 and 99.20 JPY/USD is input into the lower limit price input field 422, is shown. A value input into the higher limit price input field 421 is used to generate "upper limit price information," and a value input into the lower limit price input field 422 is used to generate "lower limit price information."

When a confirmation button 413 is click on in the state shown in Figure 34, the order information generating section 16 generates the same order information group 1810B as that of the second embodiment. That is, the order information generating section 16 calculates price spreads between the fresh orders and price spreads between the settlement orders on the basis of the input information on the input screen 40 shown in Figure 34. This price spread W is given by (A-B)/(C-1), where A denotes the input value of the higher limit price input field 421, B denotes the input value of the lower limit price input field 422, and C denotes the input value of the number-of-trap input field 423. In the example of Figure 34, A = 100.00, B = 99.20, and C = 5, and thus the price spread W = 0.20 JPY/USD.

In addition, the order information generating section 16 specifies a value (1.0 JPY/USD) obtained by dividing the value input into the profit amount input field 407 (i.e., 100000 yen) by the value input into the order amount input field 402 (i.e., 100000 dollars) as spreads between the respective fresh orders and the respective corresponding settlement orders.

In this third embodiment, processing similar to that shown in Figure 25 to Figure 33 is performed, and the same transaction as that in the case of the second embodiment is performed by a plurality of fresh orders and a plurality of settlement orders.

Here, the shifting function will be described.

For example, in this third embodiment, consider the same state as that of Figure 33 of the second embodiment, that is, a state that fresh orders B1 to B5 and settlement order S1 and S5 are each contracted. At this point, as shown in Figure 34, on the input screen 40, when an order information group 1810B is generated in a state that a shifting function selection field 429 is checked, the order information generating section 16 shifts each of the transaction prices of the fresh orders B1 to B5 and the settlement orders S1 to S5 in the order information group 1810B, using 102.40 JPY/USD being a price at which the settlement orders S1, S2, and S3 are contracted, as a criterion.

In Figure 35, a point P1 shows the market price 64 at which the pieces of fresh order information 18111 to 18115 and the pieces of settlement order information 18116 to 18120 (refer to Figure 24) are generated, and is specifically 99.50 JPY/USD. In addition, a point P2 shows the market price 64 at which the settlement orders S1, S2, and S3 are contracted, and is specifically 102.40 JPY/USD. The order information generating section 16 determines the order prices of second fresh orders B1, B2, B3, B4, and B5 such that differences between each order prices of the fresh orders B1, B2, B3, B4, and B5 generated at the first time and the market price P1 matches with differences between each order prices of fresh orders B1, B2, B3, B4, and B5 generated at the second time and the market price P2. For example, the first order price of the fresh order B5 shown Figure 35 is lower than the market price 64 of the point P1 by 99.50 JPY/USD - 99.20 JPY/USD = 0.30 JPY/USD, and therefore the second order price of the fresh order B5 is set at 102.10 JPY/USD that is lower than the point P2 by 0.30 JPY/USD. That is, the second order price of the fresh order B5 is shifted from the first order price by +2.90 JPY/USD. Then, the second order price of the settlement order S5 is also shifted from the first order price by +2.90 JPY/USD. With respect to the other fresh orders B1 to B4 and the settlement orders S1 to S4, similar processing is performed.

In such a manner, by the shifting function, the fresh orders B1 to B5 and the settlement orders S1 to S5 are shifted upward or downward while the price spreads between the fresh orders B1 to B5, the price spreads between the settlement orders S1 to S5, and the price spreads between the corresponding fresh orders and settlement orders are maintained. In Figure 35, a price spread Q1 across the first fresh orders matches with a price spread Q2 across the second fresh orders.

In such a manner, every time a new order information group 1810B is generated, pieces of order price information 181G contained in pieces of fresh order information 18111 to 18115 and pieces of settlement order information 18116 to 18120 are generated using the shifting function. Then, pieces of fresh order information 18111 to 18115 and pieces of settlement order information 18116 to 18121 contained in a contracted order information group are cancelled.

With this, in the order information group 1810B generated at the second time, the pieces of order price information 181G in the pieces of fresh order information 18111 to 18115 are 102.90 JPY/USD, 102.70 JPY/USD, 102.50 JPY/USD, 102.30 JPY/USD, and 102.10 JPY/USD, respectively, and in addition, the pieces of order price information 181G in the pieces of settlement order information 18116 to 18120 are 103.90 JPY/USD, 102.70 JPY/USD, 102.50 JPY/USD, 102.30 JPY/USD, and 102.10 JPY/USD, respectively.

Note that the processing based on the shifting function may be performed by any method other than the above-described processing procedure. For example, in the state shown in Figure 35, the processing based on the shifting function may be configured such that pieces of order price information 181G of new fresh order information or new settlement order information are set centered about 102.40 JPY/USD being a base price at which the settlement orders S1, S2, and S3 are contracted. Specifically, when new fresh order information is set centered about 102.40 JPY/USD, the pieces of order price information in the pieces of fresh order information 18111 to 18115 to set the pieces of fresh order information B1 to B5 are 102.80 JPY/USD, 102.60 JPY/USD, 102.40 JPY/USD, 102.20 JPY/USD, and 102.00 JPY/USD, respectively.

By performing a transaction using this "shifting function," it is possible to continuously perform the transaction with new fresh orders and new settlement orders, using the market price 62 at which the settlement orders are contracted as a criterion. With this, an order reflecting the market price 64 is repeatedly placed, and gaining a large profit is facilitated.

Note that the above-described "shifting function" can be applied to the configuration of the above-described first or second embodiment of the present invention.

As described above, in this third embodiment, by generating a plurality of pieces of fresh order information 18111 to 18115 having pieces of order price information 181G that are set at different prices from each other and a plurality of pieces of settlement order information 18116 to 18120 having pieces of order price information 181G that are set at different prices between the input upper limit price information and lower limit price information, a customer can perform a transaction based on a plurality of first orders and a plurality of second orders within the price range only by specifying an upper limit price information and a lower limit price information within a price range in which the customer wants to perform the transaction. Therefore, according to this third embodiment, it is possible to cause a customer to simply perform processing of placing a plurality of fresh orders or settlement orders at a plurality of prices, and to reliably place the orders.

Note that, in the above-described third embodiment, the input screen 40 is configured such that an upper limit price is input into the higher limit price input field 421 and a lower limit price is input into the lower limit price input field 422 with numerical values, but the input method is not limited to this, and for example, the input screen 40 may be configured such that, using a tablet or the like having a displaying part 22 with a touch panel provided therein, a customer can set an upper limit price and a lower limit price by touching a screen with a finger, a stylus, or the like.

As described above, in the above-described embodiments, in a transaction of a financial product using a computer system, it is possible to contain the occurrence of a loss with the fluctuations in the market prices 61, 62, 63, and 64, and to provide an opportunity to gain a large amount of profit.

### [Fourth Embodiment of the Present Invention]

Any one or more kinds of a "dismissing-first-contract-chance order," a "settlement trailing stop order," and a "shifting function" can be combined with a "double repeat if-done order".

Here, the "double repeat if-done order" is a transaction form in which a repeat if-done order to place a fresh buy order and a sell order of settlement, and a repeat if-done order to place a fresh sell order and a buy order for settlement, are simultaneously placed in parallel.

By combining one or more kinds of a "dismissing-first-contract-chance order," a "settlement trailing stop order," and a "shifting function" with a "double repeat if-done order," the fresh buy order of one repeat if-done order and the buy order for the settlement of the other repeat if-done order are simultaneously placed, and a sell order for the settlement of the one repeat if-done order and a fresh sell order of the other repeat if-done order are simultaneously placed. It is thereby possible to make a profit for each transaction timing of a repeat if-done order very large.

### [Fifth Embodiment of the Present Invention]

The above-described "dismissing-first-contract-chance order" and "settlement trailing stop order" can be combined with an OCO (One Cancels the Other order) order. In addition, an order in which these are combined may be further provided with the "shifting function".

An OCO order is an order method in which two orders without priority rank are simultaneously placed and when one of them is contracted, the other is automatically cancelled.

In one example of an OCO order, in addition to a pair of a first order to acquire a position (one of a long position and a short position) at a first order price and a second order to settle the position at a second order price, a pair of a third order to acquire a position (the other of the long position and the short position) at a third order price, and a fourth order to settle the position at a fourth order price settlement are generated. Then, when one of the first order or the third order is contracted (i.e., when one of the position by the first order and the position by the third order is acquired), the other of the first order and the third order is cancelled, and a settlement order corresponding to the other order (i.e., one of the second order and the fourth order) is automatically cancelled. In other words, the third and fourth orders are cancelled when the first order is contracted, and the first and second orders are cancelled when the third order is contracted.

By combining a "settlement trailing stop order" and a "shifting function" with at least one of two orders of an OCO order, it is possible to further increase a profit for every one transaction while trying avoiding a risk.

### [Sixth Embodiment of the Present Invention]

At the time of placing any one of the "trap trade order," the "repeat if-done order," the "trap repeat if-done order," the "double repeat if-done order," and the "OCO order" described in the above first to fifth embodiments, some or all of orders can be a market order.

For example, in the case of a "dismissing-first-contract-chance order," in the above-described first embodiment of the present invention, when the market price 63 falls to pass through 100.50 JPY/USD, further falls below 100.30 JPY/USD being of a trigger price of placing a fresh order, and thereafter turns to rise to 100.50 JPY/USD (e.g., in the state shown in Figure 17), the order information generating section 16 can place a market order having the same details as those of the fresh order information 18101, and can cause the contract information generating section 14 to contract this market order.

In addition, in the case of a "settlement trailing stop order," when the market price 63 rises after the contract of a fresh order and becomes equal to a price that satisfies a requirement of settlement (e.g., when the market price turns from rising to falling to become less than 102.20 JPY/USD as shown in Figure 20), the order information generating section 16 may place the same market order as that of the settlement order information 18102, and may cause the contract information generating section 14 to contract this market order.

According to this sixth embodiment, since any one of a limit order, a stop order, and a market order can be used as order information, it is possible to apply the present invention to various order forms.

### [Seventh Embodiment of the Present Invention]

In the above-described first to sixth embodiments, there is described the case as an example where, when a plurality of transactions are performed in parallel, the spreads between the first orders thereof (e.g., fresh orders) are set uniformly, and all the spreads between the first orders and the corresponding second orders are also set equally. However, some or all of these spreads can be set non-uniformly or unequally.

In addition, in the above-described first to sixth embodiments, in the case where a plurality of series of transactions are repeatedly performed in parallel, in some or all of the transactions, it is possible to cause the order prices of a first order and a second order of a settled transaction not to match with the order prices of a first order and a second order of a transaction to be newly performed.

Furthermore, in the case where placing and contracting of a first order and a second order are repeatedly performed, the sequence of a "sell order" and a "buy order" of a first order and a second order may be opposite to the sequence of the previous time. For example, a "first order" may be a buy order and a "second order" may be a sell order in order information generated at the first time, and a "first orders" may be a sell order and a "second order" may be a buy order in order information generated at the second time.

Note that, in the above-described embodiments, the financial product trade managing system 1A is implemented using a client/server system of a network computer system, but the same functions as those of the financial product trade managing system 1A can be implemented using various computers such as a personal computer that does not form a client/server system, or various communication terminals/personal digital assistants such as a portable terminal and a tablet. In addition, at least some of the system configurations of the financial product trade managing apparatus 1 and the financial product trade managing system 1A can be constituted by a computer program, and can be implemented by installing the program into various computers or various communication terminals/personal digital assistants.

In addition, the above-described embodiments are described the case as an example where a financial product is foreign exchange, but are not limited to them, and the present invention can be applied to, for example, a financial product trading system that deals in other financial products such as stocks and bonds.

The above-described embodiments are merely examples of the present invention, and it goes without saying that the present invention is not limited to only the above-described embodiments.

### [Example]

As an Example of the present invention, the results of a back test of a financial product transaction method using the present invention will be described. The back test is a simulation using data on past exchange rate, to confirm the effectiveness or the like of the transaction method.

In the transaction methods according to the above-described embodiments, a dismissing-first-contract-chance order is placed in a first order (fresh order), and a settlement trailing stop order is placed in a second order (settlement order). In contrast, a conceivable transaction method is to place trailing stop orders in both a first order and a second order.

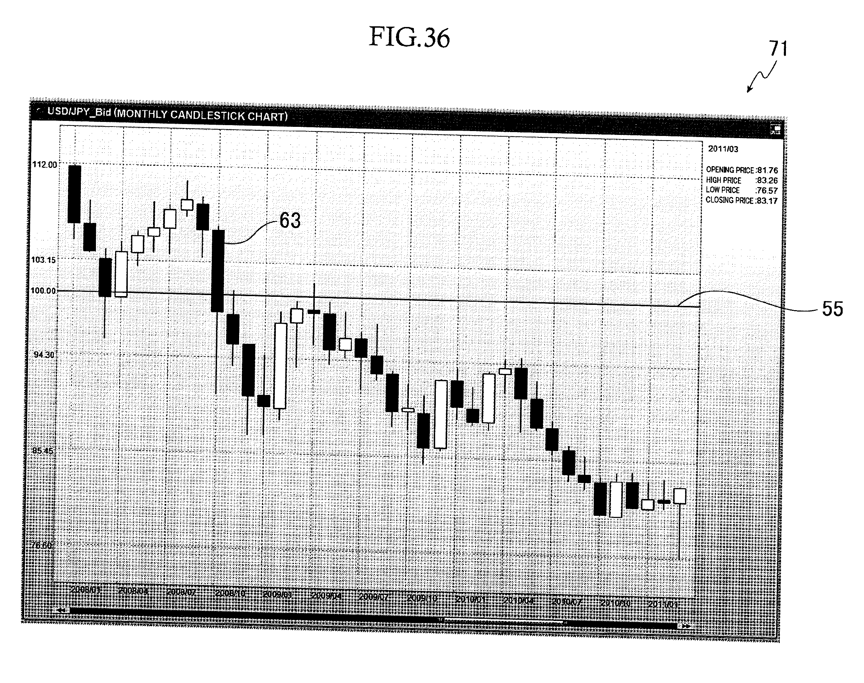

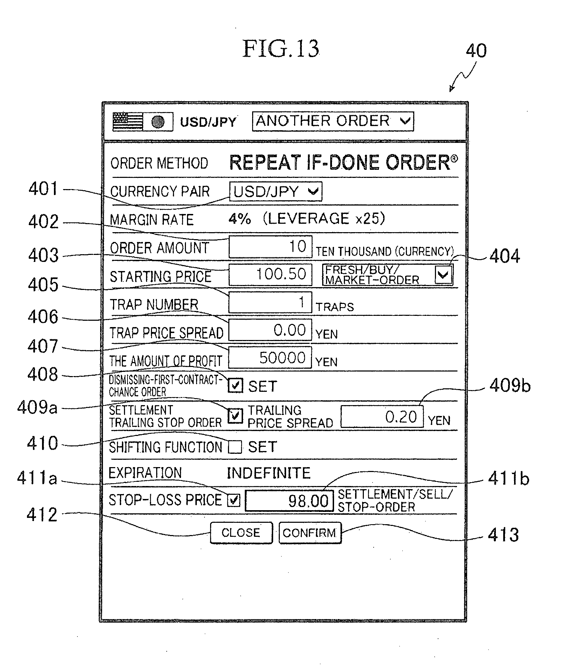

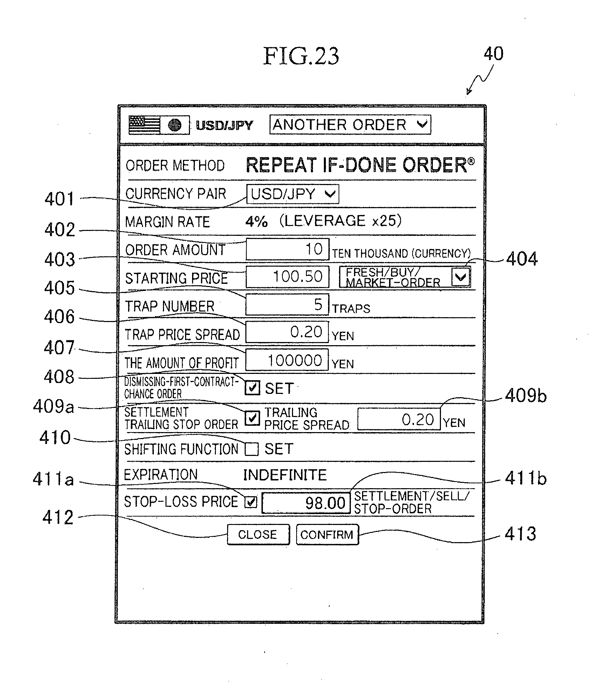

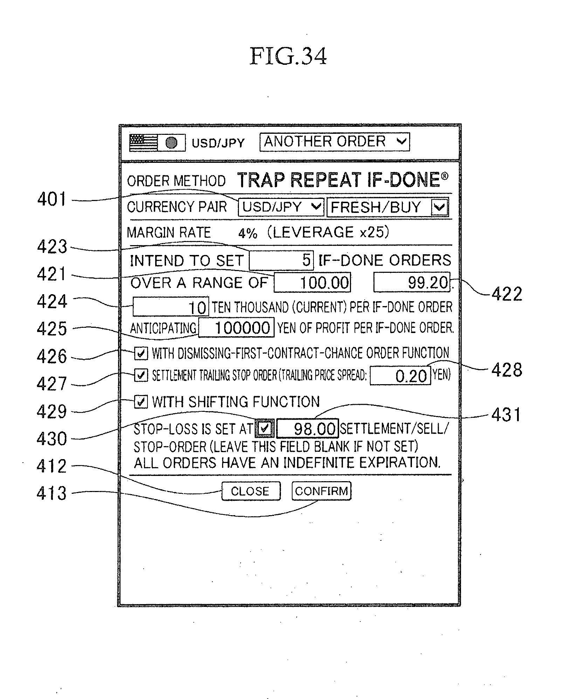

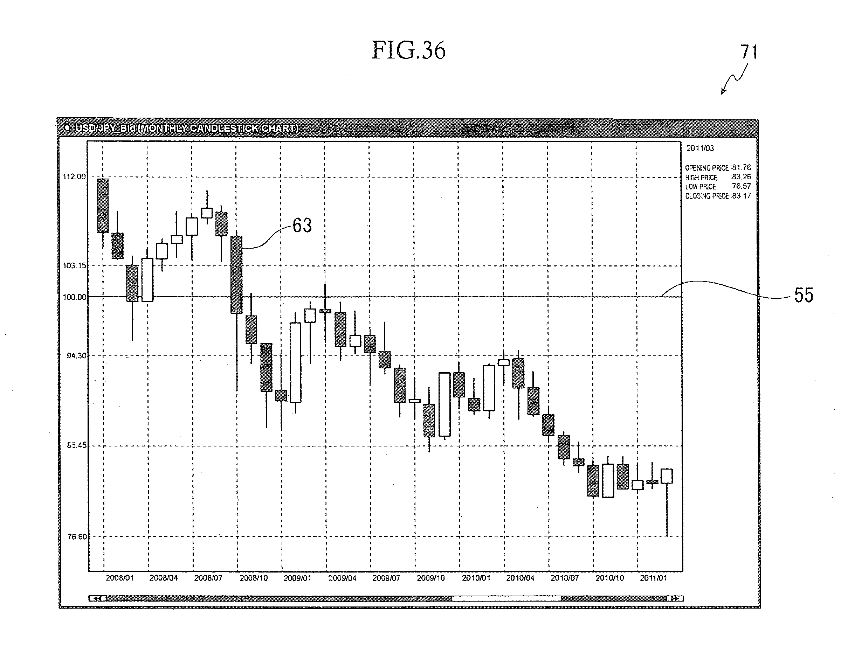

The present inventors compared the simulation results of first orders of these two kinds of transaction methods by performing a back test using a chart 71 in Figure 36. The chart 71 in Figure 36 shows a market price 63 of a foreign exchange rate in U.S. dollar/Japanese yen, from January 2008 to January 2011.

The following simulations have been conducted on the basis of foreign exchange rate in U.S. dollar/Japanese yen during this period, with respect to the Example and a Comparative Example.

In this simulation, in both the present invention and a Comparative Example, a transaction method was set to an if-done order in which a fresh order is a buy order at 100.00 JPY/USD and a settlement order is a sell order at 101.00 JPY/USD.

In the simulation of the Example, a placing-contracting difference was set at 1.00 yen. That is, a fresh order was set to be placed when the market price 63 falls passing through 100.00 yen and becomes 99.00 yen. Note that this Example adopted a dismissing-first-contract-chance order, and thus if the market price 63 further falls after placing the order, a fresh order price 55 was fixed at 100.00 yen.

In the simulation of the Reference Example, an order placing trigger was set at 1.00 JPY/USD. That is, a fresh order was set to be placed when the market price 63 falls passing through 100.00 yen and becomes 99.00 yen. In addition, a trailing width was set at 0.20 yen. That is, the first order price was set to fall by 0.20 JPY/USD like 98.80 JPY/USD, 98.60 JPY/USD, 98.40 JPY/USD, ... when the market price 63 falls by 0.20 JPY/USD like 98.80 JPY/USD, 98.60 JPY/USD, 98.40 JPY/USD, ....

With such settings, the results shown below (Table 1) were obtained by the simulations.

**[Table 1]**

| Trading method | Profit and loss | |
|---|---|---|
| | Maximum drawdown | Unrealized profit and loss at end of back test |
| **Present invention** | **-128,900** | **0** |
| Comparative Example | -225,900 | -159,900 |

As shown above, in the Example, a maximum drawdown (meaning maximum unrealized loss) and an unrealized profit and loss when the back test was finished are both small, and in particular the unrealized profit and loss is zero yen. This is because the first order price does not fall with the fall of the market price, and is not contracted until the market price 63 rises again to 100.00 yen being the original fresh order price 55 (that is, because a long position is hard to occur), and an appraised value is hard to fall. It is thereby found that, in the Example, even in a bear market, a loss due to a fall of the appraised value becomes small, which can contain the reserve of a required margin from becoming excessively large.

On the other hand, in the Reference Example, a maximum drawdown and an unrealized profit and loss when the back test was finished are both large. This is because a first order price gradually falls with the fall of the market price 63, an order is easy to be contracted (that is, a long position is easy to occur), and therefore a drawdown (unrealized loss) is easy to occur. It is thereby found that in the Reference Example, in a bear market, a loss becomes large, which makes the reserve of a required margin excessively large.

As described above, it was confirmed that the present invention can contain, in a transaction of a financial product using a computer system, in a bear market in particular, occurrence of a loss with the fluctuations in the market price.

### Reference Signs List

1A ... financial product trade managing system
1 ... financial product trade managing apparatus
14 ... contract information generating section
16 ... order information generating section
61, 62, 63, 64 ... market price
181 ... order table
181L ... trailing width information
181K ... placing-contracting difference information
18101, 18111, 18112, 18113, 18114, 18115 ... fresh order information (fresh order information)
18102, 18116, 18117, 18118, 18119, 18120 ... fresh order information (settlement order information)
18103, 18121 ... stop loss order information

## Claims

1. A financial product trade managing apparatus to perform a transaction of a financial product, comprising:
an order information generating section to generate order information to place a first order to acquire one of a long position and a short position, and order information to place a second order to acquire the other one of the long position and the short position, wherein
the order information on the first order is set such that the first order is contracted after the market price fluctuates in one of a falling direction and a rising direction to pass through a first order price, and thereafter reverses a direction of the fluctuation to reach again the first order price,
the order information on the second order is set such that the second order is contracted after the market price fluctuates in the other one of the falling direction and the rising direction to pass through a second order price, and thereafter reverses the direction of the fluctuation to reach again the second order price, and
the order information on the second order contains trailing width information representing a value of a trailing width, and is set such that, every time the market price fluctuates in the other one of the falling direction and the rising direction to pass through the second order price and thereafter fluctuates in the direction by the trailing width, the second order price is changed in the direction by the trailing width.

2. The financial product trade managing apparatus according to Claim 1, wherein the order information on the first order is set such that the first order price is fixed even when the market price fluctuates in the one of the falling direction and the rising direction to pass through the first order price and fluctuates in the direction by the trailing width or more.

3. The financial product trade managing apparatus according to Claim 1, wherein the order information on the first order is set such that the first order is placed when the market price fluctuates in the one of the falling direction and the rising direction to pass through the first order price and further fluctuates in the direction to reach a first order placing trigger price, and is contracted when the market price thereafter reverses the direction of the fluctuation to reach the first order price.

4. The financial product trade managing apparatus according to Claim 1 or 2, wherein the order information on the second order is set such that the second order is placed when the market price fluctuates in the other one of the falling direction and the rising direction to pass through the second order price and thereafter further fluctuates in the direction to reach a second order placing trigger price, and is contracted when the market price thereafter reverses the direction of the fluctuation to reach the second order price.

5. The financial product trade managing apparatus according to any one of Claims 1 to 4, wherein the order information on the first order and/or the order information on the second order is set to be placed as any one of a limit order, a stop order, and a market order.

6. The financial product trade managing apparatus according to any one of Claims 1 to 5, wherein the order information on the second order is set such that the second order is not contracted when the market price reverses the direction of the fluctuation to reach again the second order price, but the second order is contracted after the market price further fluctuates to pass through the second order price.

7. The financial product trade managing apparatus according to any one of Claims 1 to 5, wherein the order information on the second order is set such that the second order is contracted when the market price reverses the direction of the fluctuation to match again with the second order price, using this matching as a trigger.

8. The financial product trade managing apparatus according to any one of Claims 1 to 7, wherein the order information generating section performs, after the first order and the second order are contracted, on the basis of the second order price of the second order, processing of generating the order information to place another one of the first order at the first order price and the order information to place another one of the second order at the second order price, and processing of canceling the order information on the contracted first order and the order information on the contracted second order.

9. The financial product trade managing apparatus according to any one of Claims 1 to 8, wherein the order information generating section generates, with respect to the same financial product, the order information on the plurality of first orders having the first order prices different from one another and/or the order information on the plurality of second orders having the second order prices different from one another.

10. The financial product trade managing apparatus according to any one of Claims 1 to 9, wherein the order information generating section is set so as to repeat, after the order information on the first order and the order information on the second order are each contracted, processing from acquisition of a position by another one of the first order to settlement of the position based on the second order.

11. The financial product trade managing apparatus according to Claim 10, wherein the order information generating section sets the first and second order information such that a transaction in which the first order is a buy order and the second order is a sell order, and a transaction in which the first order is a sell order and the second order is a buy order are repeated in parallel.

12. The financial product trade managing apparatus according to any one of Claims 1 to 11, wherein the order information generating section sets the first and second order information such that, between an input upper limit price and lower limit price, the plurality of first orders having different prices and the plurality of second orders having different prices are placed.

13. The financial product trade managing apparatus according to any one of Claims 1 to 11, wherein the order information generating section generates
the order information containing, in addition to a pair of a first order to acquire a position at a first order price and a second order to settle the position at a second order price, a pair of a third order to acquire a position at a third order price and a fourth order to settle the position at a fourth order price, and causes a recording unit to record the generated order information, and
the pieces of order information on the first to fourth orders are set such that the first order is set as a sell order,
the second order is set as a buy order to settle the first order,
the third order is set as a buy order,
the fourth order is set as a sell order to settle the third order,
the third and fourth orders are cancelled when an order relating to the first order is contracted, and
the first and second orders are cancelled when the third order is contracted.

14. The financial product trade managing apparatus according to any one of Claims 1 to 12, further comprising a contract information generating section for contracting the generated order information when the market price reaches a predetermined price.

15. A financial product trade managing system to perform a transaction of a financial product using a financial product managing apparatus and a communication terminal that are in communication connection with each other, the financial product trade managing system comprising:
an order information generating section to generate order information to place a first order to acquire one of a long position and a short position, and order information to place a second order to acquire the other one of the long position and the short position, wherein
the order information on the first order is set so as to be contracted after the market price fluctuates in one of a falling direction and a rising direction to pass through a first order price, and thereafter reverses a direction of the fluctuation to reach again the first order price,
the order information on the second order is set so as to be contracted after the market price fluctuates in the other one of the falling direction and the rising direction to pass through the second order price, and thereafter reverses the direction of the fluctuation to reach again the second order price, and
the order information on the second order contains trailing width information representing a value of a trailing width, and is set such that, every time the market price fluctuates in the other one of the falling direction and the rising direction to pass through the second order price and thereafter fluctuates in the direction by the trailing width, the second order price is changed in the direction by the trailing width.

16. A financial product trade managing method to perform a transaction of a financial product, comprising:
order information generating processing of generating, using a computer, order information to place a first order to acquire one of a long position and a short position, and order information to place a second order to acquire the other one of the long position and the short position, wherein
in the order information generating processing,
the order information on the first order is set so as to be contracted after the market price fluctuates in one of a falling direction and a rising direction to pass through a first order price, and thereafter reverses a direction of the fluctuation to reach again the first order price,
the order information on the second order is set so as to be contracted after the market price fluctuates in the other one of the falling direction and the rising direction to pass through the second order price, and thereafter reverses the direction of the fluctuation to reach again the second order price, and
the order information on the second order contains trailing width information representing a value of a trailing width, and is set such that, every time the market price fluctuates in the other one of the falling direction and the rising direction to pass through the second order price and thereafter fluctuates in the direction by the trailing width, the second order price is changed in the direction by the trailing width.

17. A computer readable storage medium in which a computer program to perform a transaction of a financial product is stored,
the computer program causing:
a computer to execute order information generating processing of generating, using the computer, order information to place a first order to acquire one of a long position and a short position, and order information to place a second order to acquire the other one of the long position and the short position, wherein
in the order information generating processing,
the order information on the first order is set so as to be contracted after the market price fluctuates in one of a falling direction and a rising direction to pass through a first order price, and thereafter reverses a direction of the fluctuation to reach again the first order price,
the order information on the second order is set so as to be contracted after the market price fluctuates in the other one of the falling direction and the rising direction to pass through the second order price, and thereafter reverses the direction of the fluctuation to reach again the second order price, and
the order information on the second order contains trailing width information representing a value of a trailing width, and is set such that, every time the market price fluctuates in the other one of the falling direction and the rising direction to pass through the second order price and thereafter fluctuates in the direction by the trailing width, the second order price is changed in the direction by the trailing width.
